# EUROPEAN PATENT SPECIFICATION

(11) **EP 3 482 914 B1**
(45) Date of publication and mention of the grant of the patent: **04.08.2021**
(21) Application number: 18205707.5
(22) Date of filing: 12.11.2018
(51) Int. Cl.: B29C 64/386, B29C 64/106, B33Y 10/00, B33Y 50/02

(54) **METHOD FOR DETERMINING THE INCLINATION OF THE AXES OF A MACHINE WITH FIVE OR MORE AXES FOR PRODUCING OBJECTS BY ADDITIVE MANUFACTURING, SYSTEM FOR PRODUCING OBJECTS BY SAID METHOD**
VERFAHREN ZUM BESTIMMEN DER NEIGUNG DER ACHSEN EINER MASCHINE MIT FÜNF ODER MEHR ACHSEN ZUM HERSTELLEN VON OBJEKTEN DURCH ADDITIVE FERTIGUNG, SYSTEM ZUM HERSTELLEN VON OBJEKTEN NACH DIESEM VERFAHREN
PROCEDE DE DETERMINATION DE L'INCLINAISON DES AXES D'UNE MACHINE A CINQ AXES OU PLUS POUR LA PRODUCTION D'OBJETS PAR FABRICATION ADDITIVE, SYSTEME DE PRODUCTION D'OBJETS PAR CE PROCEDE

(30) Priority: 14.11.2017 IT 201700129458
(43) Date of publication of application: 15.05.2019
(73) Proprietor: VenturaPlus S.r.l., 50126 Firenze (IT)
(72) Inventor: BANDINI, Francesco, 50137 Firenze (IT)
(74) Representative: Karaghiosoff, Giorgio Alessandro

(56) References cited:
- WO-A1-2016/040507
- US-A1- 2014 197 576
- US-A1- 2015 266 244

## Description

### TEXT OF THE DESCRIPTION

The present invention concerns a method for determining the inclination of the axes of a machine with five or more axes for producing objects by addictive manufacturing, system for producing objects by said method.

Addictive manufacturing technologies are emerging from the prototype manufacturing field alone, for which they were initially only intended, in order to become a tool for the manufacturing of finished parts. In particular, addictive manufacturing, i.e. addictive manufacturing or production, finds a counterbalance in the market evolution, which is increasingly more oriented towards customized manufacturing and individual pieces and which therefore requires quick and highly reconfigurable manufacturing processes that are able to pass through the smallest number of operations possible from the project, only existing in digital format, to the physical object version.

Generally, the addictive manufacturing (AM) technology provides starting from digital models to obtain finished products with the progressive addition of construction material distributed over material layers previously generated according to the geometry provided by the digital model, in contrast with the traditional subtractive techniques, such as those used for chip removal, which allow to obtain an object through the removal of material from a rough starting block.

A digital three-dimensional model, generally a 3D drawing, is subdivided into layers by software through orthogonal planes at a given direction. Each layer (or 'slice') is delimited by its contour line, hereinafter named "profile", determined by the geometry of the intersection between the 3D object and the plane of intersection; this profile guides a material dispenser intended to form the layer along a path that allows to obtain the profile with the material deposited and solidified. Once the profile has been deposited, it is also possible to fill the section in order to obtain a solid object.

The increasing success of the addictive manufacturing methods and systems is due to the huge advantages of these methods and systems in terms of manufacturing and/or operating costs of a product and of the extremely small time to market delay between the design and market entry of the product.

In terms of the configurability and customization of a product, addictive manufacturing allows almost total freedom with regard to the definition of the shape of the object to be obtained. Thanks to the fact of being able to lay down sections, layer after layer, the constructive constraints connected to undercuts and internal cavities are overcome, and possible jutting parts are managed with the creation of ad hoc supports that are subsequently removed once the printing is finished.

From an economical point of view, addictive manufacturing can allow to reduce the manufacturing cost thanks to, among others, the drastic simplification of the productive lines, the possibility of producing already assembled components and mechanisms and the much reduced use of raw materials.

Moreover, the interesting possibility to be able to reorganize the product distribution system and the supply of the raw manufacturing materials and components must also be considered. In fact, through addictive manufacturing, it is possible to obtain the virtual product model and to send the product in this format to the user telematically, who can directly print it at his premises. Approaches of this kind could revolutionize the world of spare parts, which would be printed on demand, therefore allowing to completely eliminate the need to immobilize capitals for managing warehouses.

The addictive manufacturing techniques are applicable to different types of materials, such as, for example, plastics, metals and their alloys, and also plastic and metal material mixtures.

There are different techniques for feeding and solidifying the material, and which provide curing or polymerization by ultraviolet radiation for plastic materials and the sintering of metal powders by laser or other effects that generate at least a partial superficial melting of the metal material for metals.

Among these techniques, a known variant provides for feeding the material in the form of a plastic or metal thread. In case of metal materials, a layer is deposited and bound to the next one by melting the material by means of a laser, electric arc or electron beam. In case of plastic materials, much less intense heat sources are required to allow the thermoplastic material to pass to the semi-liquid state so that to be able to mold it as desired and to make it bond with the lower layer.

Known systems for manufacturing pieces by addictive manufacturing provide different architectures of the manufacturing machines depending on the embodiment of the method variant selected and/or on the way the object is moved.

In the state of the art, there are known solutions in which the relative angular and translation displacement between a worktable and a deposition/solidification head of the material layer occurs along five axes, of which three translation axes and two rotation axes rotating around at least two of said translation axes. Machines with architecture of this type are known and widely used in the field of milling systems, i.e. of manufacturing by chip removal.

Patent application publication US2015266244 claims a system for fabricating an object comprising an extruder comprising a nozzle for material deposition coupled with a controller configured to apply a correction factor calculated for a path of the nozzle based on a slope of the surface of the object to be fabricated wherein the extruder is configured and arranged to cause movement of the nozzle along the path to deposit a material on a slope of the surface of the object and the correction factor removes differences in thickness of the deposited material caused by the slope in relation to the path.

Patent application publication WO2016040507 claims for a method for adapting a three-dimensional printing device to create low-fidelity prototypes with fast fabrication processes replacing surfaces with wireframe meshes i.e. printing edges and meshes instead of continuous surfaces thus reducing time and materials needed to create a prototype. The method can include slicing an original 3D model into segments.

Patent application publication US2014197576 claims for a device for production of a three-dimensional object from a solidifiable material by a sequential discharge of drops, comprising an object carrier, a discharge unit, control means for controlling the reciprocal movements and aligning the object carrier carrying the object at least partially fabricated and the discharge unit wherein the axis in the mutually aligned state is arranged in reference to a tangent surface in the direction of gravity without further specifying how the tangent surface is defined.

Currently, addictive technology machines deriving from milling machines with five axes, in which the milling tool can be replaced by deposition heads adapted to deposit metal materials with technologies generally indicated as Direct Energy Deposition addictive technologies, are known on the market. Currently, the most widely used Direct Energy Deposition technology on the market is named Laser Cladding or Laser Powder Deposition and provides for using fine metal powers that are placed on the flame of a laser beam to allow the melting and subsequent solidification thereof in order to obtain a continuous bead of material.

Theoretically, the use of rotary tables would allow to incline the object being manufactured during the deposition of the layers so that to widely eliminate the need of the so-called supports, i.e. of columns of material that must be constructed to support the jutting parts of the object, i.e. protruding beyond the outer shape of the underlying geometry, with reference to the overlapping direction of the single material layers during the manufacturing of the piece.

The main obstacle to the use of Direct Energy Deposition technologies on multi-axis machines is constituted by the complexity of the management software: in fact, in order to overcome the necessity of supports for the protruding profiles, a translatory and relative orientation movement of the deposition head and the worktable must be programmed; this movement must occur simultaneously and fluidically along all five axes available in order to obtain a regular and controlled deposition of the material. Currently, software for the generation of the deposition movement of the layers along 5 axes is available on the market and derives from software for the generation of the milling paths along five axes. This software has considerable drawbacks, among which a degree of complexity of use that makes them hardly acceptable in the 3D printing world, in which the philosophy is to pass from the virtual model to the physical object in just a few clicks.

The present invention introduces a method for calculating the material deposition paths for Addictive Manufacturing and which intends to overcome both the limitations of conventional 3D Printing systems for parallel planes, the so-called 'slicers', and the limitations of the most sophisticated addictive manufacturing systems of CAM (Computer Aided Manufacturing) derivation conceived for calculating the milling tool paths of multi-axis machine tools.

In fact, slicers are advantageously extremely simple to use since the deposition path is generated automatically, without practically requiring the intervention of the user, however, their limitation lies in the fact that in order to be able to deposit objects with strong undercuts with respect to the vertical, or jutting portions, auxiliary structures, named supports, must be added and laid down to support the jutting layers during the deposition. These supports imply a waste of material and deposition times, as well as of time and specialized manpower of a user for their subsequent removal. Another problem of slicers is the impossibility to deposit objects having strong variations in the cross section, which generate empty zones between the adjacent slices, without resorting to the complete filling of the object.

The addictive manufacturing systems of CAM derivation of the current state of the art only partially resolve the need of supports problem, by exploiting the abilities of modern machine tools provided with rotary axes to suitably incline the piece being constructed with respect to the deposition head. However, this possibility requires the operator to perform a thorough preliminary analysis of the geometry of the object and a series of subsequent logical operations, which make such systems practically unusable by the user who generally starts operating in the world of Addictive Manufacturing.

The novelty of the present invention consists in the fact that, thanks to the original methods described and claimed hereunder, it integrates itself in the state of the art as the "missing connection" between conventional slicers and sophisticated CAM derivation systems, because it solves the limitations of the firsts while preserving their extreme simplicity of use and the automaticity of the calculation.

According to a first aspect, the object of the present invention is to implement a method that allows to generate material layer deposition paths for the manufacturing of objects with an addictive manufacturing technology, which method is extremely simple and can be, in most cases, carried out automatically, without requiring the intervention of specialized personnel.

A further object of the present invention consists in obtaining a method of the aforesaid type and which can be carried out locally by the machine tool control units or remotely online, and possibly also offline, without requiring any assistance from the service personnel aside from the loading or sending of the digital three-dimensional model of the object to be produced in a predetermined and widely used file format.

Still according to a further aspect, the present invention aims at a method that automatically detects and automatically carries out at least one of the following operations:
calculating the relative orientation between the object being constructed and the material deposition device, i.e. the deposition flow direction along a predetermined layer profile;
detecting empty spaces originating from abrupt object section variations, between two adjacent layers, and determining additional deposition paths for a number of filling profiles of said empty spaces in order to generate supports for the layer immediately above;
detecting isolated profiles, i.e. that cannot be supported also when suitably orienting the part and which therefore require supports, and automatically generating the deposition paths for the manufacturing of the piece of said supports.

A further aspect aims to obtain an addictive manufacturing system for which no service personnel with high technical qualifications is required.

A first embodiment of the invention consists in a method for calculating the addictive manufacturing deposition path by using a system comprising a worktable on which the object to be produced is obtained by feeding material performed by a deposition head, in the form of material layers deposited one on the other; the material deposition direction with respect to the piece has a predetermined direction, said deposition head and said worktable being movable with respect to each other and orientable with respect to each other according to at least five axes, and a processing unit being provided for determining the movement path of the deposition head and/or the worktable, which method comprises the following steps:
a) providing a digital three-dimensional model of the object to be manufactured;
b) defining a sequence of section planes of the digital three-dimensional model, which section planes have a predetermined relative orientation and a predetermined relative distance from one another, while respectively between the two successive section planes a layer or slice of said digital three-dimensional model is formed and has a contour line in each of the two successive section planes;
c) determining the digital line of the contour of the object at each section plane obtained by intersecting each section plane with the digital three-dimensional model;
d) determining the path of the deposition head depositing a material layer and the relative orientation between said deposition head and the worktable for depositing a material layer corresponding to the shape of the surfaces interfacing with the outside or with a cavity of the portion of the three-dimensional model delimited by two adjacent section planes;
e) depositing said material layer by moving said deposition head and/or said worktable correspondingly to the path and relative orientation of the head and of the worktable determined in the preceding step d);
f) repeating steps d) and e) till depositing the material layers for each of the slices of the three-dimensional model defined by the sequence of section planes,

Characterized by providing the following steps
at step b)
   b1) defining a space direction with reference to said object, as shown by the digital three-dimensional model and which space direction is the direction normal to the worktable plane on which the material is deposited;
   b2) defining section planes of the digital three-dimensional model parallel to one another and orthogonal to said space direction and which section planes are spaced from each other by a predetermined extent that can change from a minimum distance to a maximum distance of said section planes;
at step d)
   d1) defining a set of points on each one of the contour lines generated by the intersection of respectively each one of the section planes with the outer surface or the surface delimiting the inner cavities of the digital three-dimensional model;
   d2) for each point of a contour line in a first section plane, connecting the two immediately adjacent points by a junction segment and calculating the position of one point on the contour line in a second section plane directly below said first section plane with reference to the space direction defined at step b1) as the point of intersection of said second contour line in said lower plane with an intersection plane parallel to said space direction and perpendicular to said junction segment;
   d3) defining, as the direction of relative orientation between the worktable and the deposition head, the direction of the vector defined by the segment joining said point on the contour line of the upper section plane and through which said intersection plane passes with the point of intersection of this plane with the contour line of the lower section plane;
   d4) constructing the path of the deposition head with respect to the worktable and the relative orientation angle of the deposition head and of the worktable for the deposition of the material layer corresponding to the surface of the three-dimensional object comprised between said lower section plane and said upper section plane by repeating the steps d2) and d3) for each point of the contour line in the upper section plane.

According to an embodiment, the digital three-dimensional model can be in the form of a CAD file of the parametric type and the contour lines on each section plane are subject to approximation with a polygonal line. An embodiment variant provides that said points of the polygonal line are constituted by interpolation points of the contour line.

An alternative embodiment provides that the digital three-dimensional model is in the form of an STL file, in which the surfaces are approximated by a set of triangles and therefore the contour lines along the section planes are constituted by polygonal lines in a native way.

An embodiment variant can provide for the conversion of the digital three-dimensional model in a parametric CAD format into a digital three-dimensional model in STL format.

In this case, in the sequence of steps described above, the step d2 is replaced by the alternative step to determine the plane that intersects the lower section line, which consists in the derivation of the Tangent Vector at the upper contour line, said tangent vector constitutes the normal of this intersection plane and said Tangent Vector being determined at the points defined on the contour line in step d1).

In fact, using a parametric geometry, two alternatives are possible:
1. All of the aforesaid steps are carried out in the exact same way, but a parametric geometry is used instead of an STL geometry.
2. Step d2 is not carried out and is replaced by the identification of the intersection plane through the tangent at the upper profile in the point considered. Where this tangent is the normal to the intersection plane, which is therefore fully defined.

According to a further characteristic of the method, which is provided in combination with the characteristics of the preceding embodiments, the method provides automatic identification steps for identifying the empty spaces between the adjacent material layers defined according to the contour lines in the adjacent section planes and i.e.:
- defining a maximum allowable distance threshold between the contour line of the digital three-dimensional model in a first lower section plane and the contour line of the digital three-dimensional model in the section plane immediately above said first section plane, which maximum threshold distance allows the material layer of the upper slice to rest on the material layer of the lower slice, so-called printing threshold;
- carrying out step d1) for the contour lines in said two adjacent section planes;
- determining, for each point along the upper and lower contour line, the distance from the contour line of the adjacent section layer, respectively lower and upper;
- comparing said distances with the printing threshold and determining the contour of the empty space by linking the points on each of the two contour lines having a distance from the upper contour line higher than said printing threshold;
- taking into account at least the part of the contour line that delimits the empty space and that corresponds to a segment of the contour line of the lower slice, which constitutes the support for a successive adjacent filling profile, and determining the deposition path of the material in said successive filling profile by providing an offset translation of the profile of the layer immediately below the aforesaid contour line delimiting the empty space in the lower section plane,
said offset being at most equal to the value of the printing threshold;
said step being repeated for each new filling profile deposited on an adjacent previous filling profile till a last deposited filling profile is adapted to constitute the support for at least one segment of the material layer of the upper slice, i.e. having a distance from the material layer of the upper slice not higher than the printing threshold.

Thanks to this characteristic, the method allows to automatically identify the presence of empty spaces (Gaps) between two adjacent material layers and, therefore, the lack of a lower profile on which the profile immediately above can be deposited and by which it can be supported. As will become clearer in the following description of specific embodiments, the filling profiles are rested one on the other and end at the point of intersection with the contour line coinciding with the profile of the upper layer, constituting the support in the zones delimiting the empty space.

According to an embodiment, the method provides, for each point of the filling profile, to carry out the step of determining whether these points are inside or outside of the empty space, i.e. of the area delimited by said line delimiting the empty space, the points falling out of the contour delimiting the empty space being rejected for determining the deposition path of the corresponding filling profile and only the points falling in said empty space being maintained.

As will be illustrated more clearly hereinafter, the points of intersection of the filling profile path with the contour line defining the profile of the upper layer, whenever applicable, are defined as starting or ending points of the filling profile and, therefore, starting and ending points of the material to be dispensed.

The method allows to generate filling profiles, also when the geometry of the empty space is so that the offset profiles of the lower layer do not intersect the profiles delimiting said empty spaces.

Moreover, the method allows to generate filling profiles also whenever there is no intersection between the geometry of the object and the successive section plane, whereby the empty space is determined by the profile of the lower section, which would remain empty for not finding correspondence with the contour line defining the profile of the upper layer, therefore making the deposition of the object incomplete.

According to an embodiment of the method relating to the determination of the filling layer profiles and the corresponding paths of the deposition head, i.e. of the relative movement between the deposition head and worktable, determining the points of intersection of the profile of each filling material layer with the material layer of the upper slice is provided, by starting or ending each filling layer at said point of intersection.

An embodiment of the method according to one or more of the variants described above provides the following steps:
i) for each point of the contour line of the upper section plane a corresponding point is determined on the contour line in the lower section plane, said point corresponding to the point of intersection of said contour line in the lower section plane with a plane of intersection passing by the point on the contour line of the upper section plane and which plane is perpendicular to the segment joining the two points immediately adjacent to said point on opposite sides thereof;
ii) for each point along the contour line of the upper section plane, the distance from the associated point defined by the plane of intersection on the contour line in the lower section plane is determined and said distance is compared with the printing threshold,
iii) marking in a different manner the points on the contour line in the upper section plane, whose distance from the corresponding intersection point on the line of the lower section plane is lower than the printing threshold from those points for which the aforesaid distance from the corresponding intersection point on the contour line in the lower section plane is higher than the printing threshold;
iv) the intersection points generated on the lower contour line being transferred on said line;
v) while the junction line of each pair of points constituted by a point on the contour line of the upper section plane and by a corresponding intersection point on the contour line of the lower section plane whose distance is lower than the printing threshold, defines the axis of orientation of the deposition head with respect to the worktable and while
vi) then, for each point on the contour line in the lower section plane, the minimum distance is determined from a facing segment of the contour line in the upper section plane,
vii) said distance being compared with the printing threshold and the points for which said distance is higher than said printing threshold being marked in a different manner from those points for which said distance is smaller than the printing threshold,
viii) the points on the contour line in the upper section plane and those on the contour line in the lower section plane for which the distance from the corresponding intersection point on the contour line of the lower section plane and the facing segment of the contour line in the upper section plane respectively is higher than the printing threshold, being joined by an interpolation line that forms the contour of an empty space between the profiles of two adjacent slices.

According to a further embodiment provided in combination with one or more of the preceding embodiments, the orientation between the deposition head and the worktable for the deposition of the filling profiles of the empty spaces is determined according to the following steps:
ix) starting from the segment of the contour line delimiting an empty space and that is in the lower section plane, the contour line of the filling layer immediately adjacent to the contour line of the previous filling layer is determined by an offset of predetermined distance from said contour line of the previous filling layer,
x) which points of the contour line for the new filling profile fall inside the empty space being determined, outside said empty space and at the exact point of intersection with the contour of said empty space, while for each point of the contour line of the new filling profile falling into the empty space the orientation of the deposition head is determined with respect to the worktable correspondingly to the direction of the vector joining said point with the origin point of the contour line of the previous filling profile or of the segment of the contour line delimiting the empty space in the lower section plane;
xi) the path of the deposition head, with respect to the worktable, is determined by the path from one to the other point along the contour line of the filling profile to be deposited;
xii) the aforesaid steps are repeated till determining, for at least one point, that it is inside the empty space and the cycle ending when all the points of the contour line for the new filling profile are all outside of the contour delimiting the empty space.

In an embodiment, the linking of the points for determining the contour line delimiting an empty space as at step viii) is carried out by following a clockwise and anticlockwise linking direction order, the clockwise linking direction corresponding to islands and the anticlockwise linking direction corresponding to a line delimiting an outer or isolated empty space.

It is clear that as already indicated above, the method provides for depositing the material of the upper layer after having deposited all of the filling profiles.

The aforesaid method is applicable automatically both for the identification and determination of the successive material layers used to obtain supports also in the presence of isolated profiles that are not supported by any underlying material layer deriving from the object shape. In this case, the method immediately determines the lack of a lower support layer for the protruding part, which involves the definition of a plurality of overlying material layers that generate supporting columns of the isolated layers.

As will become clearer in the following description, the invention uses a system for the manufacturing of objects by means of a method according to one or more of the embodiments and embodiment variants described above and which system comprises:
a worktable on which the piece is constructed by means of an addictive manufacturing process;
a material deposition head for generating material layers,
relative displacement and relative orientation actuators of the deposition head and/or the worktable, according to five axes;
a control signal generation assembly of the relative displacement and orientation actuators of the deposition head and/or the worktable, which assembly comprises a processor and a software program that can be carried out by said processor, which program interprets the instructions for determining the control commands of said actuators for the relative displacement and/or orientation of the deposition head and/or the worktable for the deposition of a succession of material layers;
a processing unit in which a digital three-dimensional model of the object to be produced is loaded or can be loaded or can be generated;
and in which processing unit a program that interprets the encoded instructions for activating said unit is loaded and can be carried out so that to follow the steps according to one or more of the embodiments and embodiment variants of the method described above.

According to a further aspect and a corresponding embodiment of the invention, the steps of the method according to one or more of the preceding embodiments and embodiment variants are encoded in the form of instructions in a processor program and are stored or can be stored in a hard disk of a processor or are stored on a portable storage device, such as a portable hard disk, a USB pen drive, an optical disk, for example a CD or DVD ROM or CD or DVD RAM, or optical disks of other formats. This way, any processing unit can be configured to generate the deposition paths and to provide, in the form of instructions stored on storage support readable by the system, i.e. the machine tool or by communicating to said system or said machine tool, the path data from which to generate the commands of the movement actuators, respectively of the deposition head and the worktable.

The object of a further embodiment is a control method for an addictive manufacturing machine, which control method uses one or more of the above described variants and embodiments of the deposition path calculation method for addictive manufacturing.

These and other characteristics and advantages of the present invention will become clearer in the following description of some embodiment examples shown in the accompanying drawings, in which:
Fig. 1 schematically illustrates an example of a machine tool for addictive manufacturing with 5 tool movement and/or worktable axes
Figs. 2 a), b), c), d), e) schematically show the manufacturing steps of an object starting from a representation of the object with a digital three-dimensional model.
Figures 3 a), b), c) schematically show the steps for determining the orientation of the tool axis, i.e. the deposition direction with reference to the worktable and/or to the direction defined for the determination of the set of section planes, as indicated in figure 2 b).
Figure 4 shows an example of two profiles of the contour lines in two adjacent section planes and of the tool axes calculated, as well as of the orientation of the tool, i.e. of the axis of the deposition head.
Figure 5 schematically shows the steps of the method according to the present invention for the calculation of the profiles delimiting the empty spaces present between a lower layer and the layer directly above thereof.
Figures 6 a), b), c), schematically show the determination and deposition steps of the filling profiles for the example of figure 5.
Figures 7 to 19 show the steps of the method for determining the deposition paths of the filling profile in detail with reference to the example in figures 5 and 6.
Figures 20 and 21 show two further examples of situations in which, between two adjacent layers, an empty space is generated and which precludes the possibility that the upper layer finds a support on the adjacent lower layer, requiring the determination and deposition of empty space filling profiles.
Figure 22 shows how the method allows to generate filling profiles even when there is no intersection between the geometry of the object and the successive section plane.
Figure 23 shows an embodiment wherein the method according to the present invention automatically generates a support for an isolated profile protruding from the underlying shape and without support layers.

With reference to the present description and claims, the term tool axis refers to the axis that defines the direction in which the deposition material for the formation of a layer is dispensed by a nozzle or the like.

The term orientation of the axis of the tool or of the deposition direction or the extrusion direction refers to the relative orientation of this axis or this direction with reference to the piece being processed and/or to the worktable and must be understood as comprising the configurations in which the tool is stationary and the worktable moves along the five axes, the worktable is stationary and the tool moves along the five axes, both the tool and the table move along one or more of the axes or along said five axes.

The term contour line or layer, although specifically referred to as different bodies, are to be understood as equal. In fact, when considering the central axes of the layer profiles defined by the section planes, these would only be moved of an offset value of the contour lines generated on the section planes and, therefore, the method and system would operate indifferently from the reference to the contour line or the layer.

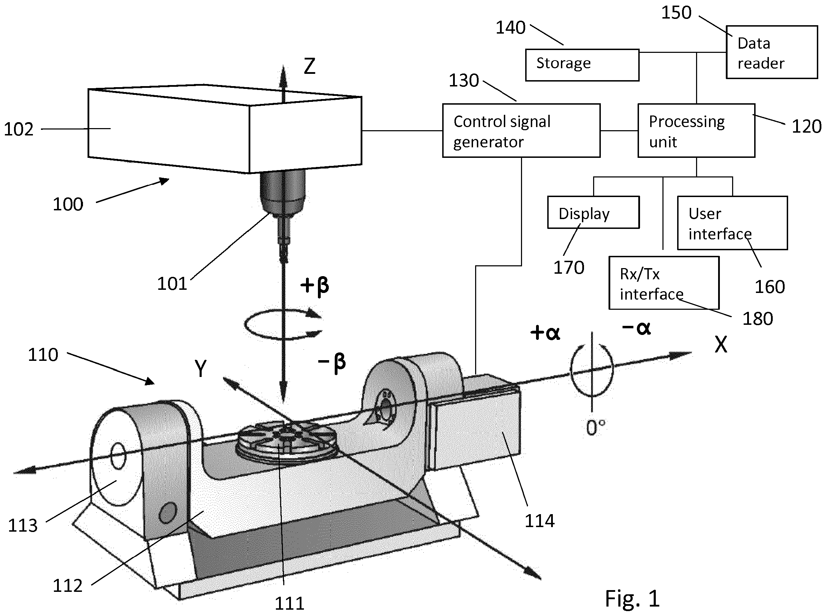

Figure 1 shows a schematic example of a system for producing objects by addictive manufacturing, with tool 101 and worktable 111 movements along five axes, which, in the example, consist in the three Cartesian axes x, y, and z and in the rotation around the z axis and around the x axis. With the respective angular ranges +α, -α, +β, -β. A system of actuators 102, 114 carries out the movement on the basis of the command signals transmitted by a control signal generator 130. Different configurations are possible and provide for the movement of either the tool 101 or the worktable 111, or for a combined movement, such as in the example shown.

A preferred embodiment provides that the tool 101 and relative assembly are stationary and oriented along the z axis, while the worktable 111 carries out all of the orientation and translation movements with respect to the tool 101. The worktable can be mounted on a support constituted by mobile elements 112, such as the one shown or, in a more complex version, a robotized arm is moved.

The control signal generator 130 operates under the control of a processing unit 120. It can have any architecture of processor or peripheral device, such as for example a PLC, a Microprocessor or a conventional PC and it comprises a basic configuration of storage system 140 , in which the operative system, the control programs of the hardware unit, the processing programs of the virtual three-dimensional models, from which to generate the deposition paths of the material layers and possibly the programs for generating three-dimensional models, are stored.

The unit 120 can also be provided with an external storage support reader denoted by numeral 150, thanks to which said programs and/or files relative to the digital three-dimensional models can be loaded by importing them from other systems. A display 170 allows to visualize both the imagines relative to the digital three-dimensional model and the command and/or setting interface, as well as to the other interfaces of the programs installed and run by the unit 120. A user interface 160 allows the user to enter commands and data or setting parameters and also to carry out processing or controlling steps in a manual way by launching the corresponding interfaces of the programs installed and carried out. A further Rx/Tx communication interface, thanks to which the system can be directly connected, either by a network, by cables or by wireless communication, with one or more external and delocalized servers, can be provided.

The operations of these delocalized servers can be limited to a mere monitoring and/or diagnostic function of the operations of the system.

According to an embodiment, the system can be provided in combination with other similar systems or these can be connected to one another by means of a network. In this case, the delocalized server can carry out the functional monitoring and diagnostic activities on all of the network systems.

A further embodiment provides that the delocalized server also carries out the function of generating instruction files relative to the deposition paths of the layers and to send them to the different network systems, each for manufacturing an identical object or each for manufacturing a different piece. In this case, only a specialized user can preside and control the preparatory operations of the description files of the paths by intervening manually, when required, in the automatic procedures so that to correct or change some solutions.

Still according to an embodiment variant, in replacement of the delocalized server, the calculation operation of the deposition paths can be carried out by the processing unit of a system and delivered to the processing units of the other systems for the control signal generation steps of the actuators and the deposition heads 101.

In an embodiment variant, the processing units 120 of different systems connected with the network can each assume a part of the processing with respect to the determination of the deposition paths of the material layers, therefore reducing the calculation times.

The operations of the different units 120 to 180 can, as far as possible, also be acquired by dedicated software that is run by the processing unit 120 and that configures the latter to acquire one or more of said operations. Obviously, this is limited to the operations that do not require a specific hardware, such as the display, input devices, storage medium readers and other.

The method and system according to the present invention can be applied to different technologies of addictive manufacturings, which differ by the type of material, material deposition method and consolidation thereof, as well as by the adhesion to the lower layers.

These types have been known in the state of art for some time.

A preferred embodiment of the method and system according to the present invention provides, in combination with said method and with said system, the use of the technology named Laser or Arc Direct Energy Deposition, in which welding or micro-welding, laser or arc techniques are used in combination with the use of welding material in the form of a metal thread.

It should be noted that the method and system can also be used in combination with the deposition techniques of plastic polymer thread (both thermoplastic and thermosetting) that can be processed thermally or by ultraviolet radiation for example.

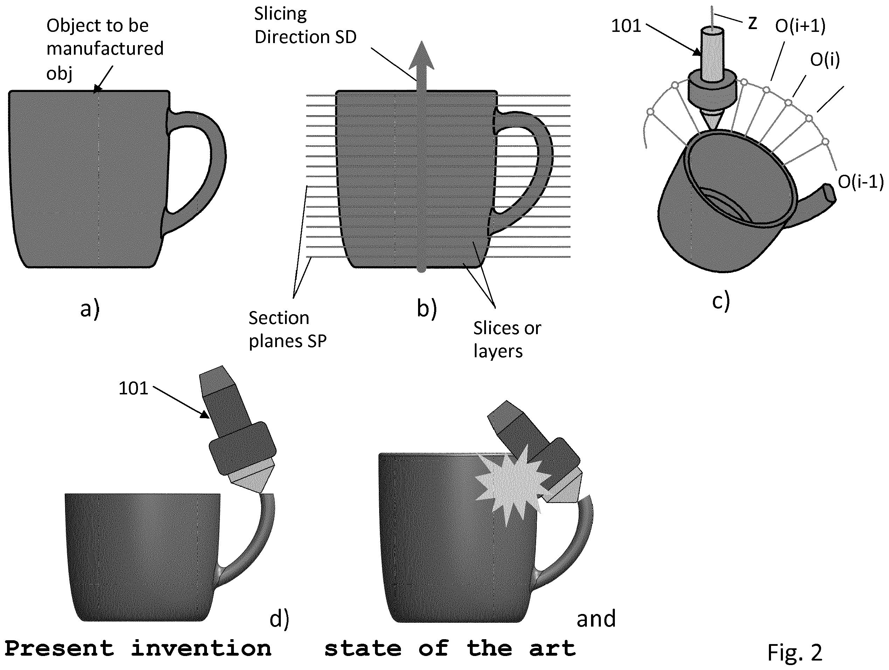

Figure 2 shows an example of an object that can be manufactured by addictive manufacturing, denoted by obj. The obj object of figure 2) is represented by a digital three-dimensional model that can be generated thanks to any CAD system or also starting from an existing object, thanks to three-dimensional images acquired by a 3D scanning system. The digital three-dimensional object is in the form of a digital file that is connoted by an extension. There are digital models named parametric, such as in the case of most of the models obtained with CAD programs, and digital three-dimensional models that represent a three-dimensional object thanks to a plurality of polygons, such as in the case of STL files, in which the surfaces of the shape of the obj object are approximated by a combination of triangles, for example.

According to a first characteristic, the method and system according to the present invention use a first step of defining the section planes SP in order to generate slices of said model from a digital three-dimensional model and which is typically used in 3D printing, in which the movement of the tools with respect to a worktable occurs along three linear axes.

According to this step schematically depicted in figure 2b), there initially is a slicing direction indicated by the arrow SD, thanks to which the section planes SP that subdivide the three-dimensional model into a plurality of slices or layers of a predetermined thickness are defined.

According to a further characteristic, the section planes are provided spaced equidistant and are therefore parallel to each other.

The processor processing the three-dimensional model for generating the deposition paths of the material layers calculates, for each section plane, the contour line that molds the object shape in the section plane.

As depicted schematically in figure 2c), for each slice of the three-dimensional model corresponding to each material layer deposition, the profiles constituted by the contour lines defined in the section planes are used to determine the deposition direction of the material that forms a new layer, which is rested on the layer previously deposited, and the relative path between the tools, i.e. the deposition head 101 and the already deposited layers of the object being manufactured, i.e. the worktable 111.

Despite this, for convenience, the figures, such as figure 2c) and subsequent, always show the deposition head inclined in the space, and it should be reminded that this head 101 and therefore the tool axis z that can coincide with the deposition direction are often stationary and that the piece being manufactured, i.e. the worktable 111, is moved with respect to the deposition head 101.

The selection of the slicing direction SD can be carried out manually by the service personnel in a preparatory step of the system to the manufacturing process, or the system can automatically select the direction SD on the basis of an analysis of the digital three-dimensional model and which is based on the minimization of the number of special conditions, such as the number of different jutting layers present after selecting a certain direction SD, the number of empty spaces requiring the deposition of filling layers and possibly also on the basis of the identification of predetermined preponderant symmetries in the shape of the object to be manufactured.

Still according to a characteristic, the distance of the section planes and therefore of the single layers to be deposited must respect a maximum value. In addition to this distance value, the thickness of the material deposited in a layer is not sufficient to adhere against the layer immediately below and previously deposited and consolidated. As is clear, this maximum distance is a parameter that mainly depends on the deposition technology used and on the type of material deposited.

Therefore, there is no analytical and theoretical definition of this distance between the section planes, which must be defined on the basis of the parameters of the specific system.

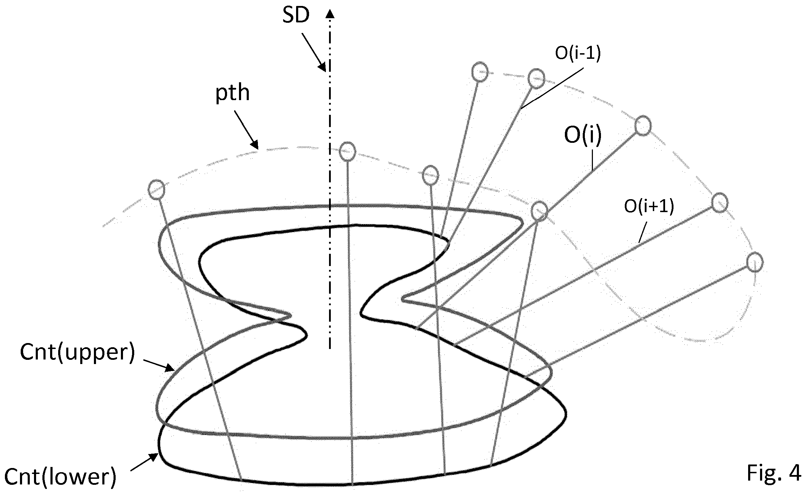

Figure 4 shows an example of two contour lines Cnt(lower) and Cnt(upper) of an object shape generated by intersecting two adjacent section planes oriented perpendicularly to the slicing direction SD.

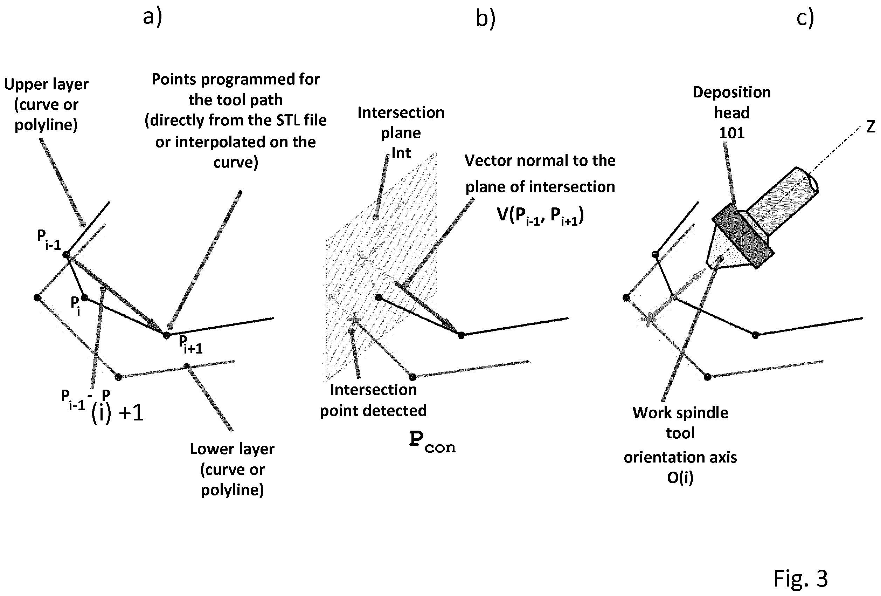

Figures 3 a), b), c) schematically show the steps of the method for determining the orientation of the deposition direction with respect to the worktable, i.e. in this case of the deposition head 101 and the tool axis z thereof.

After having generated the contour lines for each section plane SP, two alternatives, which depend on the type of file of the digital three-dimensional model used, are possible. In case of parametric CAD models, the curves must be approximated with a series of interpolation points, i.e. with a polygonal line. The interpolation settings are also given in this case by the operational parameters of the hardware and the deposition material, such as the diameter or thickness of the thread or bead of material deposited for example.

In case of digital three-dimensional models constituted by STL format files, the contour line of each section plane is automatically in the form of a polygonal line.

Therefore, given the contour lines cnt corresponding to the various section planes SP, according to the embodiment of figure 3, the method provides for carrying out, for each point Pi on said contour line, a step of identifying a conjugate point P_{con}. According to a characteristic of the present method, the vector connecting the preselected point Pi with the corresponding conjugate point P_{con} denoted by O(i) in figure 3c), defines the deposition direction, i.e. the relative direction between the tool axis Z and the worktable 111 for the deposition of the material layer at the point Pi.

In order to identify said conjugate point P_{con}, the method according to the invention provides for using the points Pi-i and Pi+i immediately preceding and following the point Pi of the set of points on the contour line of the upper section plane and which defines the profile of the upper layer to be deposited in order to define a connection vector V(Pᵢ₋₁, Pᵢ₊₁).

The point P_{con} on the contour line in the lower section plane and conjugate to each corresponding point Pi is determined as the intersection point of said contour line Cnt(lower) in the lower section plane with a plane of intersection Int that is perpendicular to said vector V(Pᵢ₋₁, Pᵢ₊₁).

An alternative method for determining the conjugate point P_{con}, whenever the contour lines are available in the parametric format, consists in the derivation of the Vector Tangent at the contour line itself. This Tangent Vector constitutes the normal of the plane of intersection Int.

By repeating the process for each point Pi of the upper contour line Cnt(upper) with i∈N and N being maximum number of points Pi, the orientations of the deposition directions of each point of the profile to be deposited are determined, as schematically depicted in figure 4. The dotted line pth indicates the path of a fixed point on the axis of the deposition head, while the lines O(i), O(i-1) and O(i+1) indicate the orientations of the deposition directions in the corresponding points Pᵢ, Pᵢ₋₁, Pᵢ₊₁.

Figure 2d) shows one of the advantages of the selection relative to the single and fixed slicing axis SD and of the relative section planes parallel to each other and fixed.

As can be seen in the layer depositions, the section plane allows not to necessarily consider the possible interference between the already deposited layers and the deposition head 101, as is instead necessary in the methods of the state of the art, which provide for a change in the position and orientation of the section planes correspondingly to the shape of the constructive parts of the object to be manufactured and as is highlighted in figure 2e).

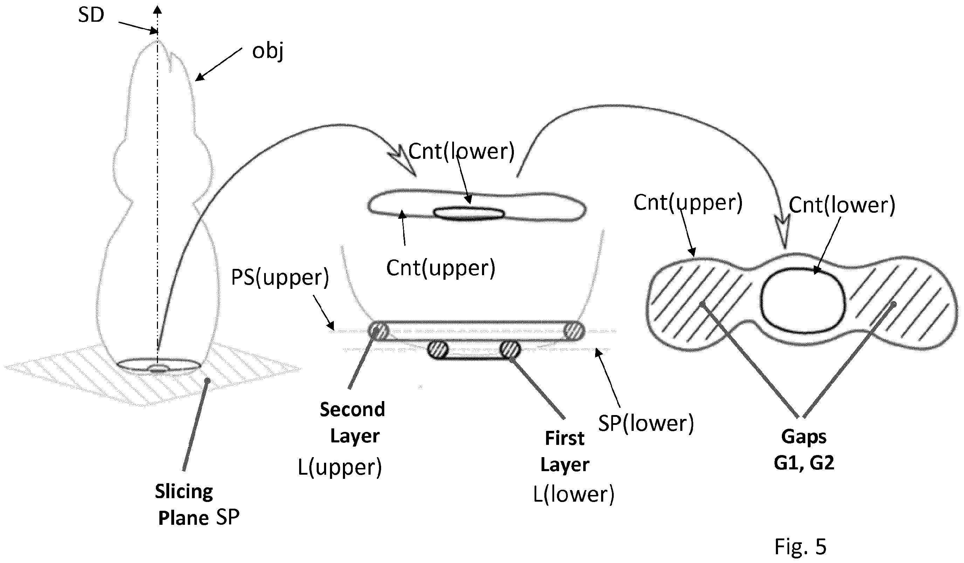

Figure 5 schematically shows a further characteristic of the method according to the present invention, thanks to which it is possible to fill the empty spaces that form between adjacent deposition material layers in combination with predetermined shapes of the object to be produced.

Despite only a few specific cases were described in the examples shown, as will become clear, the method described is not limited to these cases but can be directly transferred in any configuration having similar geometric conditions between adjacent deposition material layers.

The object obj to be produced is subject, as previously described, to the steps for determining the slicing direction, the definition of the section planes SP and the calculation of the contour lines of the shape of the digital three-dimensional model in said section planes.

In some cases, as that relative to the base of the object obj shown in figure 5, the shape of the base has a convexity towards the support plane, which has a large curvature radius to the extent that empty spaces, or Gaps named G1 and G2, are formed between the first lower material layer L(lower) and that immediately above it L(upper). Because of these empty spaces G1, G2, the upper material layer L(upper) does not find supports in the lower material layer L(lower) and cannot therefore be deposited. An embodiment of the present method provides to use the contour lines Cnt(upper) and Cnt(lower) in two adjacent section planes of which one lower SP(lower) and the other upper SP(upper) in order to identify the presence of material deposition gaps G1, G2 and to generate deposition paths of the filling profiles FL of said gaps G1, G2 that form, at the end of their deposition process, the support for the initially missing material layer L(upper) .

The figures from 6a) to 6c) show the macro steps for determining the deposition paths of the filler layers FLj where J=1, 2,.,N.

Starting from the contour lines Cnt(lower) and Cnt(upper) relative to two section planes SP(lower) and SP(upper) and using the method of the plane of intersection described with reference to figures 3 and 4, it is not only possible to establish the orientation of the layer deposition direction, i.e. the relative orientation between the deposition head and the worktable, but also the presence of the empty spaces G1 and G2, defining a maximum distance corresponding to the above defined printing threshold between the two contour lines L(upper) and L(lower) of the two section planes SP(upper) and SP(lower).

The points on the segments of the contour lines that are spaced higher than said printing threshold or that do not find a conjugate point on the contour line of the adjacent section plane are considered 'orphan' points that, once linked, define the line delimiting an empty space zone G1 and G2.

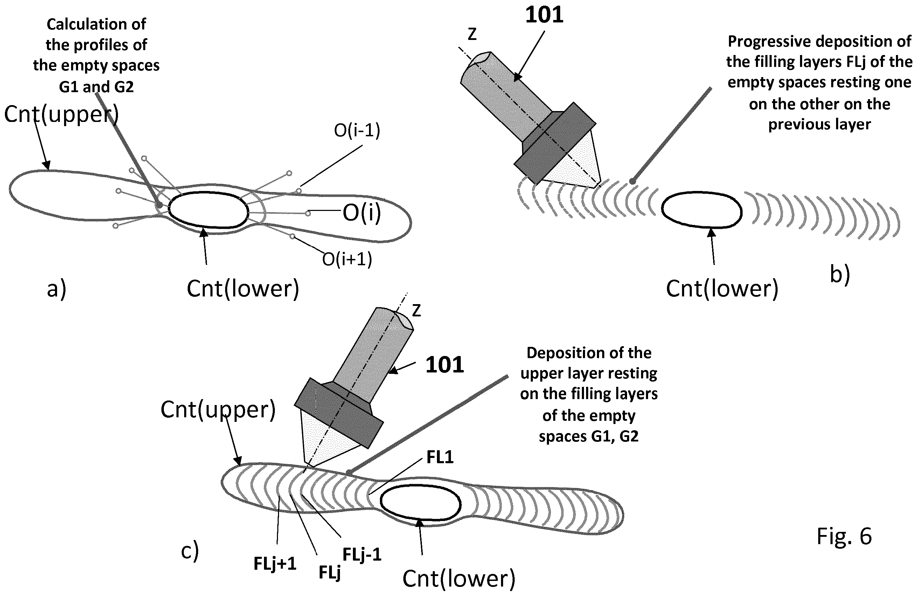

As shown in figure 6a), once the contours of the empty spaces have been determined, it is possible to calculate the deposition path of the material filling profiles. The first of these rests on a section of the previously deposited lower layer L(lower) corresponding to the profile of the contour line Cnt(lower), while the successive filling profiles FLj rest on the previous filling profile FLj-1, as depicted in figures 6b) and 6c) .

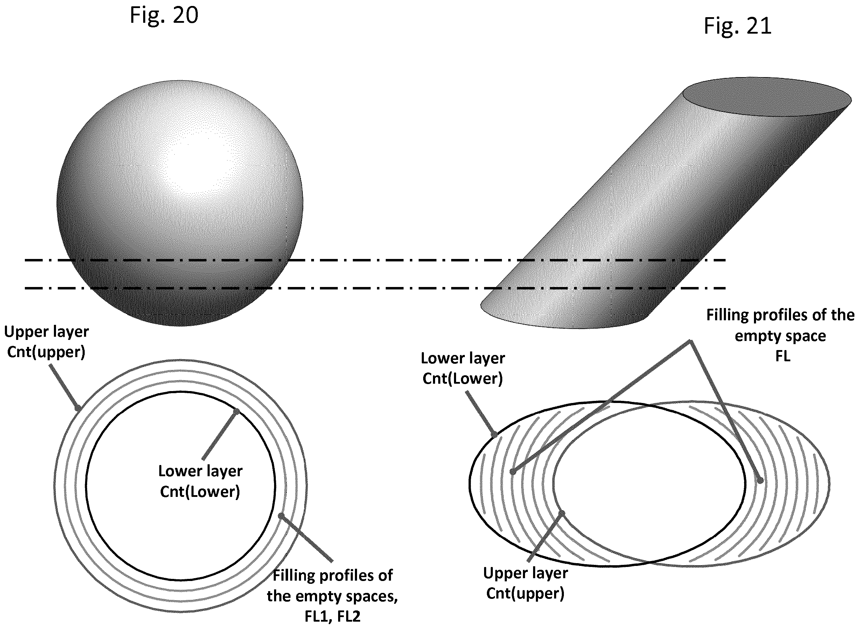

The filling profiles FLj can have a starting point and an ending point or they can also be continuous and closed, as in the case of figure 20 for example.

Once the filling profiles have been deposited, it is possible to provide for the deposition of the successive layer L(upper) following the profile Cnt(upper).

The determination of the orientation of the deposition direction, i.e. of the relative orientation between the axis of the deposition head and worktable, occurs by determining, for each point of the current filling profile, the connection vector for connecting the origin point on the previous filling profile or on the contour line delimiting the empty space in the lower plane section.

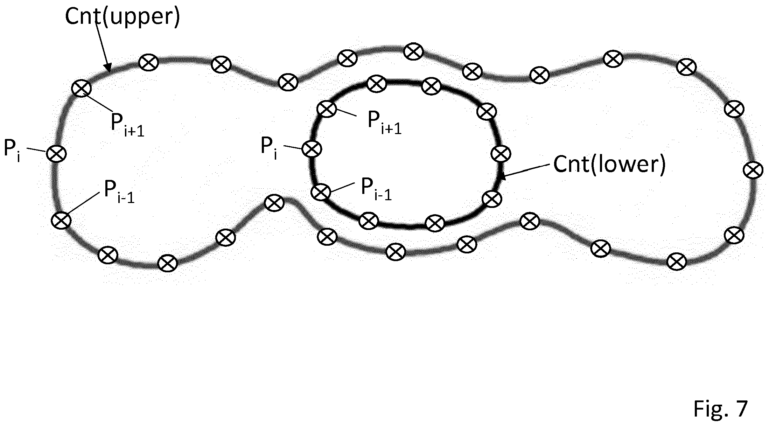

Figures 7 to 19 show the steps of an embodiment of the aforesaid method for identifying the empty spaces between two successive deposition layers and for determining the deposition path of the filling layers in detail.

The steps shown in detail in the figures obviously follow the initial steps in which:
- the digital three-dimensional model is processed in order to define the slicing direction SD and the section planes SP perpendicular to said direction and parallel to each other. As already described with reference to figure 2;
- the profiles, i.e. contour lines Cnt, of the digital three-dimensional model are calculated at each of the section planes SP;
- if the initial digital three-dimensional model is an STL file, the contour lines resulting from the intersection between the planes and the model are directly in the form of polygonal lines; if, however, the contour lines are parametric curves, points along thereof are interpolated at a predetermined distance from one another.

Figure 7 respectively shows the contour lines Cnt(upper) and Cnt(lower) in the section plane SP(upper) and SP(lower) of the object obj according to figure 5 and on which the points Pᵢ, Pᵢ₋₁, Pᵢ₊ᵢ provided at a given distance one from the other are depicted.

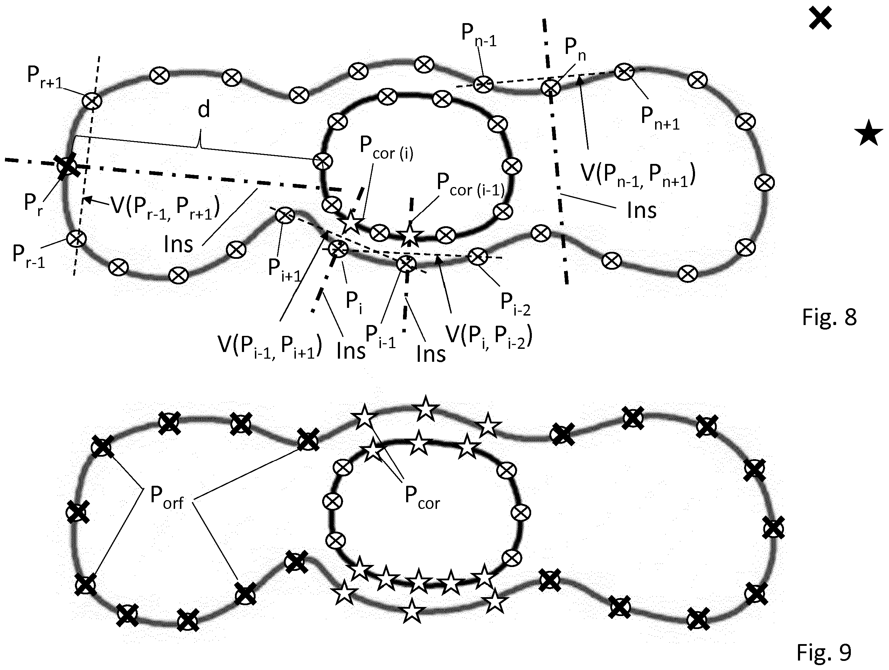

Figure 8 shows the application of the method of the plane of intersection in figure 3 applied to two contours Cnt(upper) and Cnt(lower) to identify the presence of empty spaces (Gaps) between said two contour lines on the basis of the distance between them.

Figure 8 shows the application of the method of the plane of intersection with reference to three points Pᵢ, Pᵢ₋₁, Pᵢ₊ᵢ provided on the upper contour line Cnt (upper) . The connection vector of the points Pᵢ₋₁ and Pᵢ₊₁ is denoted by V(Pᵢ₋₁, Pᵢ₊₁) and the plane of intersection passing through the point Pi is denoted by Ins. The point of intersection of the plane Ins with the lower contour line Cnt(lower) is denoted by P_{cor(i)}. If the distance of the two points Pᵢ and P_{cor(i)} is higher than the maximum distance defined as the printing threshold, i.e. is a distance between two points and therefore the point P_{cor(i)} on the lower contour line Cnt(lower) cannot constitute a support for the material deposited in the point Pi, then the point Pi is considered 'orphan,' i.e. is considered not to have a valid conjugate point and cannot therefore be deposited without filling profiles. If, as in the example shown, the distance of said two points is lower than or equal to the printing threshold, then the point Pᵢ and the point P_{cor(i)} are considered conjugate points and this quality is associated to said points as depicted with the star symbol in figures 8 and 9. As is clear, that which was described for point Pi is also valid for point Pᵢ₋₁. In this case, the vector V(Pᵢ, Pᵢ₋₂) connects the points Pᵢ and Pᵢ₋₂, while the plane of intersection originating from the point Pᵢ₋ᵢ on the contour line Cnt(upper) crosses the line Cnt(lower) in the point of intersection P_{cor(i-1)}. Similarly to the preceding case, the distance between the points Pᵢ₋ᵢ and P_{cor(i-1)} is within the printing threshold, so even in this case these two points are not considered 'orphans,' i.e. are conjugate as depicted by the star symbols in figures 8 and 9.

Similarly to the example of figure 3, the vector connecting said pair of conjugate points, respectively Pᵢ and P_{cor(i)} and Pᵢ₋₁ and P_{cor(i-1)}, defines the orientation of the deposition direction of the material at said points, i.e. the relative orientation between the tool axis z and the worktable.

By repeating the steps described above for each point present on the contour line in object, situations like the ones shown with respect to point Pᵣ or to point Pₙ on the line Cnt(upper) may be encountered, in which the distance d from the point of intersection of the plane Ins with the contour line Cnt(lower) is higher than the aforesaid printing threshold, as shown for point Pᵣ or where there are no points of intersection between the plane Ins and the contour line Cnt(lower) of the lower section plane as shown for point Pₙ.

The points on the upper contour line Cnt(upper) that are at a higher distance than the printing threshold from the corresponding point of intersection on the contour line Cnt(lower) or that do not find any corresponding point on said contour line Cnt (lower) are also identified and marked as 'orphan' points, as shown in figure 9, which graphically represents the situation at the end of the calculation loop on all points of the upper contour line Cnt(upper).

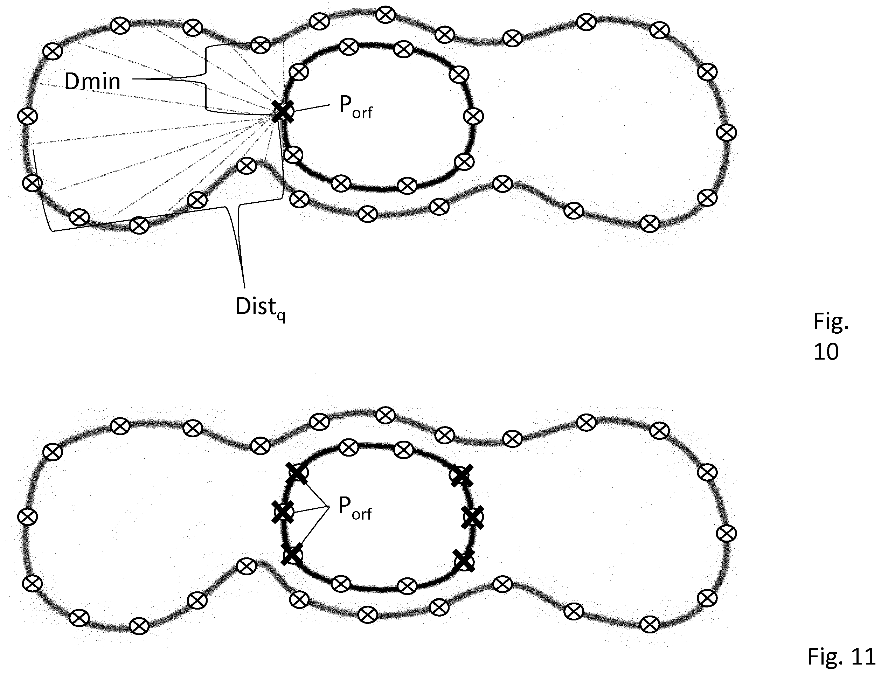

The calculation loop on the points of the upper contour line Cnt(upper) is followed by a calculation loop on the contour line Cnt(lower) of the lower layer in which, for each point on the contour line of the lower layer Cnt(lower), the minimum distance between a facing segment of the upper contour line Cnt(upper) is defined. The process is graphically shown schematically for one point of the lower contour line Cnt(lower) in figure 10, in which the distance Dist_{q}, with respect to different points on the segment of the upper contour line Cnt(sup) facing the point on the lower contour line Cnt(inf) is defined. In the example shown, the minimum distance Dmin is higher than the printing threshold and therefore the point is considered an 'orphan' point, as denoted by P_{orf} in figure 10.

Repeating the process on all points on the contour line Cnt(lower) of the lower layer allows to obtain the result of figure 11, in which, on the lower contour line Cnt(lower), all points whose distance from a segment of the upper contour line is higher than the printing threshold are identified and marked.

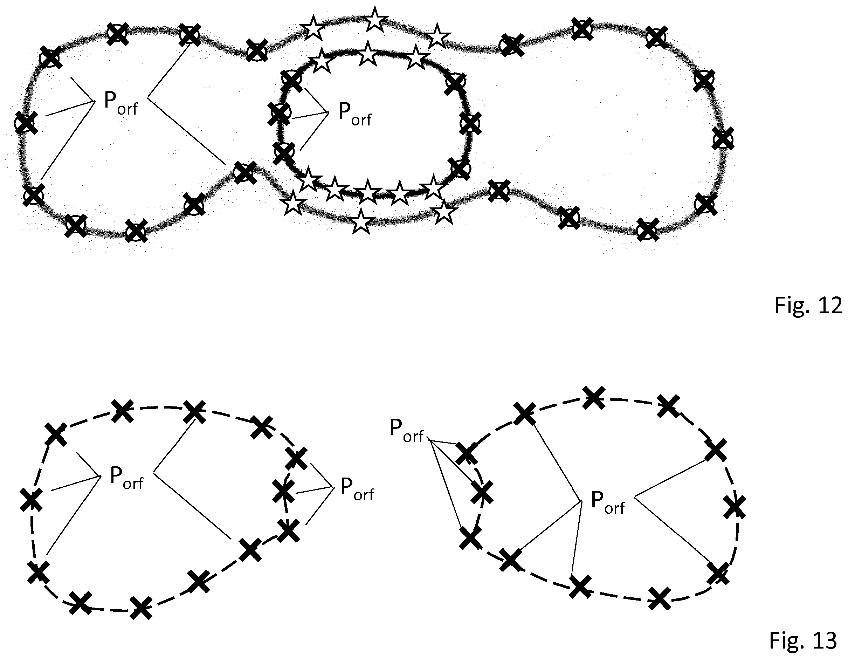

The result of the combination of the two calculation loops on the points Pi of the contour line Cnt(upper) of the upper layer and of the contour line Cnt(lower) of the lower layer is illustrated in figure 12.

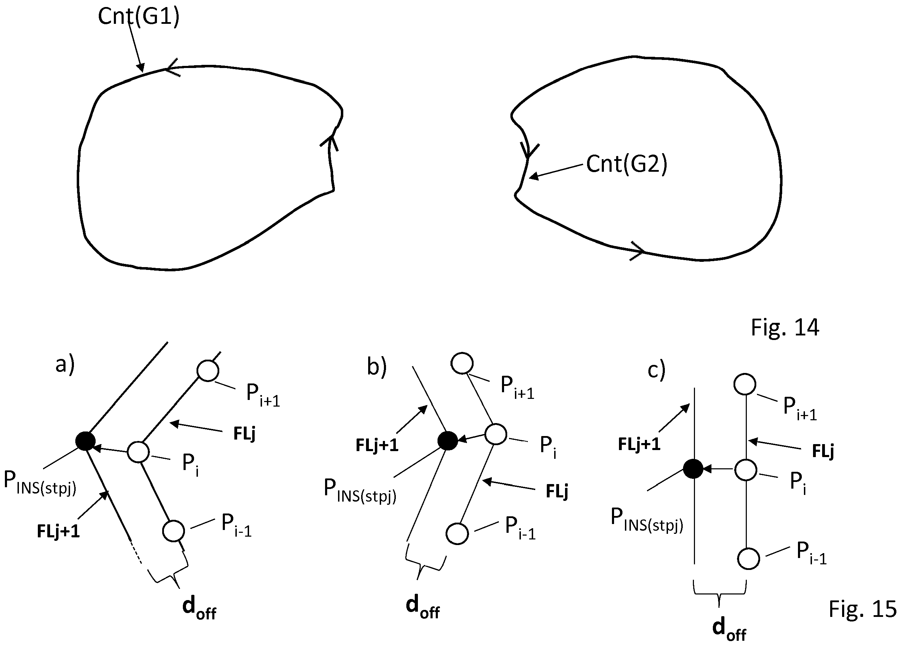

The successive step shown in figures 13 and 14 consists in determining the lines delimiting the empty spaces G1 and G2 whose contours were identified in the preceding steps. The 'orphan' points P_{orf} on the contour line Cnt(upper) of the upper layer and on the contour line Cnt(lower) of the lower layer are joined by a polyline or broken line which is defined as the line of delimitation Cnt(G1) and Cnt(G2) of the empty spaces G1 and G2.

A way of travel is also given to these broken lines, as depicted by the arrows on them, and whose objective is to define whether dealing with contour lines of inner cavities or outer surfaces.

The successive step provides for determining the deposition paths of the filling profiles FLj of the empty spaces G1 and G2, by using a series of offsets of the lower profile.

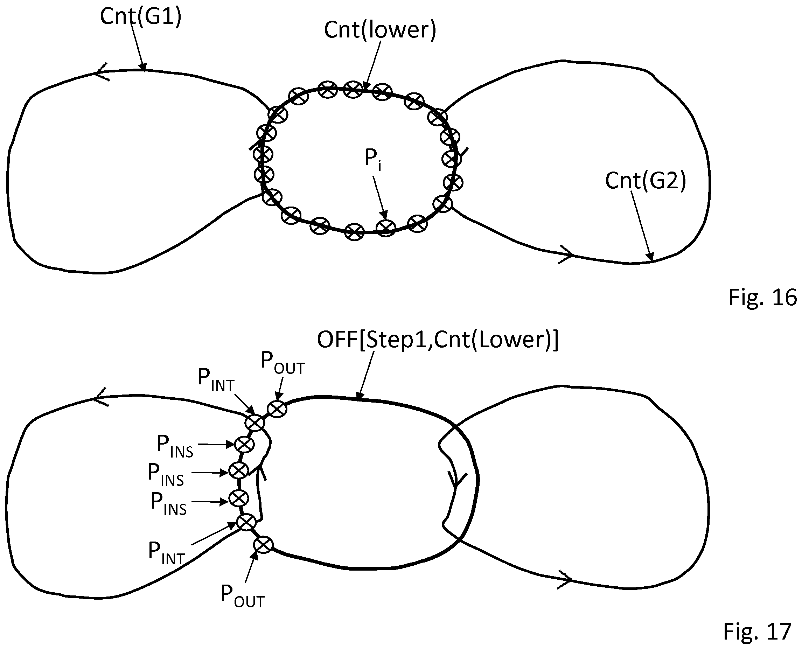

The path is determined by applying, to the lower contour profile Cnt(lower) of the lower layer, an offset in direction of the contour line Cnt(upper) of the upper layer, as shown in figure 17. The contour line of the lower layer after the first offset step, which is denoted by OFF[Step 1, Cnt(lower)], is shown in this figure.

The offset distance d_{off} preselected for the construction of a path of a successive filling profile FLj+1 from a previous filling profile FLj is selected so that to result lower or at most equal to the printing threshold and the offset vector is calculated as graphically depicted in three cases of the figures 15 a), b) and c), for the convex condition, concave condition and aligned condition of the segments of the line connecting one point Pi on the contour line Cnt (lower) or on the previous filling line FLj with a point P_{INS (stpj)} on the immediately successive filling profile FLj+1.

Simultaneously for each offset step, an analysis of the points on the lines, which represent the filling profiles, is carried out with respect to whether these points fall inside the empty spaces G1 and G2 with reference to the example shown, or outside thereof.

In an additional step, it is possible to identify the points of intersection of the profiles of the filling layers FLj with the contour line Cnt(upper) of the upper layer. This step is shown in figure 17 for the first offset step on the filling line defined OFF[Step1, Cnt(Inf)].

The points P_{OUT} are those clearly falling outside of the line delimiting the empty spaces. The points P_{INS} are the ones still inside the line delimiting the empty spaces, respectively G1 and G2, while the points denoted by P_{INT} are the intersection points of the filling line OFF[Step1, Cnt(Inf)] with the line Cnt(G1) delimiting the empty space G1. Obviously, in the present case, this is also valid for the empty space **G2 and the corresponding** line of delimitation Cnt(G2).

The pair of each point P_{INT(stpj)} on a filling profile FLj and of the corresponding point P_{INT(stpj+1)} on the successive filling profile FLj+1 is connected by a vector that defines the orientation of the deposition direction of the filling profile FLj+1, i.e. the direction of relative orientation between the deposition head and the worktable.

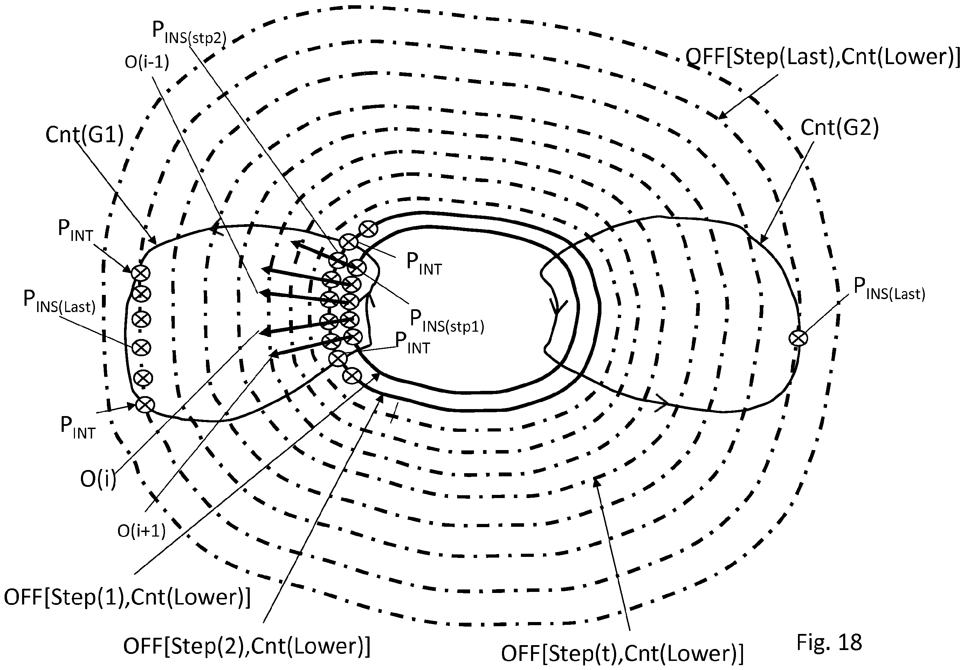

Figure 18 schematically and graphically shows the entire determination step of the sequence of filling profiles and, for the points P_{INT} of the filling lines relative to step 1 and step 2, the vectors O(i-1) , O(i) and O(i+1) that define the orientation of the deposition direction in the points P_{INS} inside the empty space G1 and belonging to the filling profiles OFF[Step(1),Cnt(Lower)] and OFF[Step(2),Cnt(Lower].

The aforesaid determination steps of a successive filling profile FLj are repeated till a point P_{INS (Last)} still exists on a curve of offset falling inside the delimitation line Cnt(G1) and Cnt(G2) of respectively one empty space G1 and/or G2.

In figure 18, the offset curve relative to the step offset Step(Last) named OFF[Step(Last),Cnt(Lower)] is the last curve with the points inside the line delimiting the two gaps G1 and G2, while the further offset generates a curve in which the points are all outside of the delimitation line Cnt(G1) and Cnt(G2) of the empty spaces G1 and G2.

With reference to the points P_{INT} of intersection with the delimitation line Cnt(G1) and Cnt(G2) of the gaps G1 and G2, these points constitute the starting and ending points of the single filling profiles FLj.

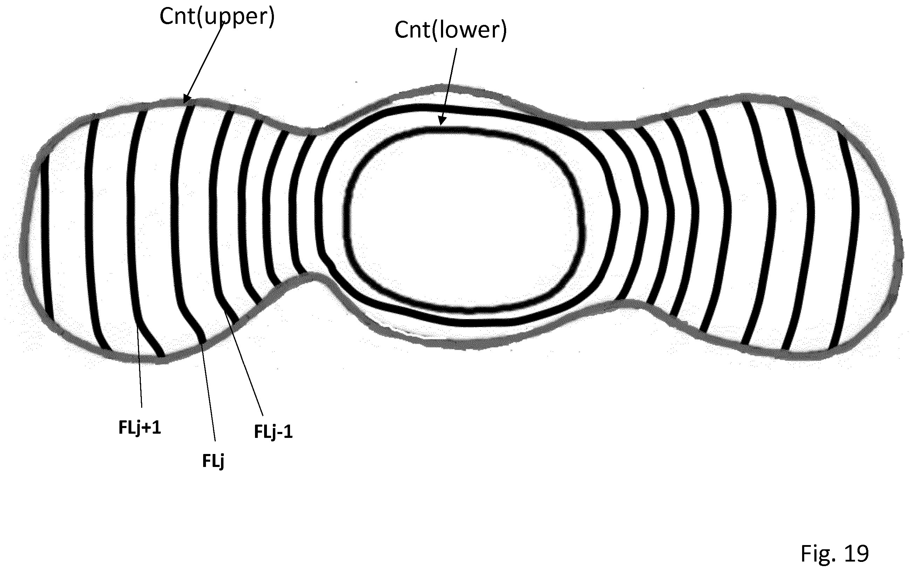

The points of intersection P_{INT} also constitute the support points of the material layer along the path defined by the contour line Cnt(upper) in the upper section plane that can therefore be deposited, the Gaps G1 and G2 being now filled as shown in figure 19.

Figures 20 and 21 show further variants of conditions in which, between the two material layers, there are gaps, therefore the layer immediately above does not find the possibility to rest on the lower layer.

The case of a sphere, in which the gap is formed between the contour lines Cnt(upper) and Cnt(lower) that define the profiles of the upper layer and the lower one, and which are spaced from each other higher than the printing threshold, is represented in figure 20. By applying the aforesaid steps, annular profiles for the filling of the empty space are generated.

Similarly, the inclined cylinder of figure 21 forms two gaps that are filled automatically by the method according to the present invention with the application of the steps described above to this example.

Still according to an embodiment, the method according to the invention also allows to generate layers for which it is not possible to define a slice since the distance of the successive section plane is higher than the protrusion of the shape of the object beyond the previous section plane.

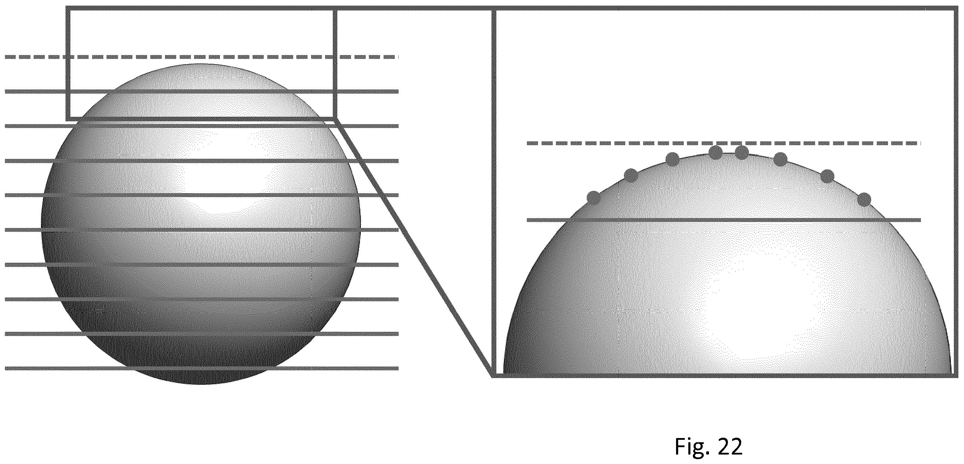

In this case, always operating with an application similar to the one described previously, the method allows to define the filling layers for the closing of the object, as depicted in figure 22.

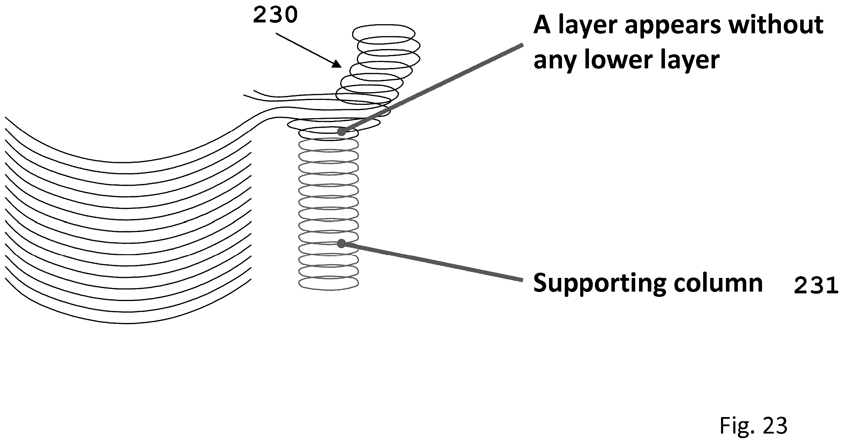

The aforesaid method also allows to automatically determine the deposition paths of the material layers that constitute a support to deposition profiles suddenly protruding or jutting out from the object shape under them. As previously stated, this case concerns 'new' or 'isolated' profiles that are generated at a certain height during the intersection procedure between the slicing plane and the geometry of the object and which do not have any other underlying layer, such as in case of the cup handle 230 referred to in figure 23 for example.

Thanks to the application of a fixed slicing direction SD and of a fixed arrangement of the section planes, the method described for identifying the gaps and the filling profiles, as well as the relative deposition paths, also detects the presence of isolated profiles and automatically constructs the supporting column 231 to support them.

According to an embodiment, the method steps according to the invention are encoded in the form of instructions in a program that can be loaded and carried out by a processing unit. The program can be loaded in an internal storage of the system or in a processing unit that operates in combination or that is part of said system. In an embodiment variant, the program is stored on a removable storage support that can be read by a reading device and that is obtained according to any of the existing types of storage supports and according to any of the existing storage protocols.

An exemplary embodiment of said program in pseudo code comprises the following instructions:
01 Start
02 Load three-dimensional model file
03 If the three-dimensional model file is not an STL file, convert it
Rem Defining the slicing direction
04 Is a slicing direction SD set manually?
05 If yes, skip to 08 or
06 Analyze the three-dimensional model
07 Define the slicing direction SD that minimizes the gaps, supporting columns and that meets the symmetries
08 Generate section planes orthogonal to the slicing direction SD, parallel to each other and equidistant
09 Calculate the contour lines of the three-dimensional model in each section plane
Rem Printing threshold

11 Set the printing threshold
Rem Loops on the section planes
12 For each pair of adjacent section planes
Rem Loops on the points of the contour line in the upper section plane of a pair of section planes
13 For each point of the contour line of the upper plane, define said point as the origin point and determine the vector that connects the preceding point with the successive point at the origin point
14 For each origin point of the upper contour line, determine a plane perpendicular to the vector of step 13 and containing said origin point
15 Determine the point of intersection of the plane of intersection with the contour line of the lower section plane
16 End points finished
17 End section planes finished
Rem Determination of the orientation of the deposition axis
18 For each origin point of the contour line in the upper plane, determine the distance with the point of intersection on the lower contour line of the associated plane of intersection
19 Compare with the printing threshold
20 If within the threshold, consider the pair of points for determining the orientation vector of the deposition head
21 Determine the orientation vector of the deposition head as the vector that connects the point of the contour line on the upper layer with the point of intersection on the lower contour line

23 Calculate the deposition path of the upper contour line with changing direction orientations between a point and a point correspondingly to the vector calculated for said points
24 If beyond the printing threshold stored for determining the gap and generation procedure of the deposition paths of the filling profiles
Rem Determination of the delimitation lines of the empty spaces or gaps
25 Loops on the points of the contour line corresponding to the profile of an upper layer
26 For each point on the upper contour line, define said point as the origin point with orphan status and determine a connection vector of a previous point and a successive point to said origin point
27 For each point of the upper contour line, determine a plane perpendicular to the vector of step 26 and containing said origin point
28 Determine the point of intersection of the plane of intersection with the contour line of the lower section plane
29 Determine the distance of the origin point with the corresponding point of intersection and compare with the printing threshold
30 If the distance is lower than the printing threshold, mark the origin point on the upper contour line as 'not orphan'
31 If the distance is higher than the printing threshold, mark the point as 'orphan'
32
33 Upper contour line points finished END
Rem Loop of the lower contour line points
34 For each point on the lower contour line, calculate the minimum distance from the segments of the upper contour line
35 Compare the minimum distance with the printing threshold
36 If the minimum distance is higher than the printing threshold, mark the origin point as 'orphan'
37 Lower contour line points finished END
38 Generate the line joining the orphan points on the upper contour line and on the lower contour line and define this line as the gap contour
39 Determine the way of travel along the contour to indicate the closed outer or isolated profiles or islands
Rem Determination of the deposition paths of the filling profiles of the gaps
Rem Loops on the points of the deposition paths inside the gap
40 Calculate the offset segment of the delimitation line corresponding to the lower contour line with offset distance lower than printing threshold
41. On each curve of offset, determine the points inside and outside of the gap and of intersection with the contour line of the upper layer and mark said points correspondingly
42 Stop in case of a curve of offset that has no point inside a Gap
43 End
44 Determination of the deposition orientation direction of the filling profiles
45 If section planes are finished END, otherwise go to 12.
Rem Generate instructions for the movement actuator commands
46 Load the deposition paths and deposition orientation direction for each layer and any filling profile or supporting columns.

47 Convert in command instructions for the movement actuators of the worktable and/or deposition tool.
48 Serialization of the command instructions list as obtained in a file stored on magnetic support.

Obviously, the pseudo code described above is considered an example and not a limitation of the method and system according to the present invention.

## Claims

1. Method for calculating the deposition path for additive manufacturing making use of a system comprising a worktable (111) on which the object to be produced (obj) is made by deposition and solidification, in sequence, of material layers one on each other by a deposition head (101), having a predetermined direction feeding the material of the layers, said deposition head and said worktable being movable and orientable with respect to each other according to at least five axes, and a processing unit (120) for determining the movement path of the tool and/or of the worktable (111), which method comprises the following steps:
a) providing a digital three-dimensional model of the object to be manufactured (obj);
b) defining a sequence of section planes of the digital three-dimensional model, which section planes have a predetermined relative orientation and a predetermined relative distance from one another, while respectively between the two successive section planes a layer or slice of said digital three-dimensional model is formed and has a contour line in each of the two successive section planes;
c) determining the digital line (Cnt(n)) of the contour of the object (obj) at each section plane obtained by intersecting each section plane with the digital three-dimensional model;
d) determining the path of the deposition head (101) depositing a material layer and the relative orientation (O(i)) between said deposition head (101) and the worktable (111) for depositing a material layer corresponding to the shape of the surfaces interfacing with the outside or with a cavity of the slice of the three-dimensional model delimited by two adjacent section planes;
e) depositing said material layer by moving said deposition head and/or said worktable correspondingly to the path (pth) and relative orientation (O(i+n))of the deposition head (101) and of the worktable determined in the preceding step d);
f) repeating steps d) and e) till depositing the material layers for each of the slices of the three-dimensional model defined by the sequence of section planes,
**characterised**
**by** providing the following steps:
at step b)
b1) defining a space direction with reference to said object, as shown by the digital three-dimensional model and which space direction is the direction normal to the worktable plane on which the material is deposited;
b2) defining section planes (SP) of the digital three-dimensional model parallel to one another and orthogonal to said space direction and which said section planes are spaced from each other by a predetermined extent that can change from a minimum distance to a maximum distance of said section planes;
at step d)
d1) defining a set of points on each one of the contour lines generated by the intersection of respectively each one of the section planes (SP) with the outer surface or the surface delimiting the inner cavities of the digital three-dimensional model;
d2) for each point (Pi) of a contour line (Cnt(upper)) in a first section plane, connecting the two immediately adjacent points (Pᵢ₋₁, Pᵢ₊₁) by a junction segment and calculating the position of one point on the contour line in a second section plane directly below said first section plane with reference to the space direction defined at step b1) as the point of intersection of said second contour line in said lower plane with an intersection plane parallel to said space direction and perpendicular to said junction segment;
d3) defining, as the direction of relative orientation between the worktable (111) and the deposition head (101), the direction of the vector V(Pᵢ₋₁, Pᵢ₊₁) defined by the segment joining said point on the contour line of the upper section plane and through which said intersection plane passes with the point of intersection of this plane with the contour line (Cnt(lower)) of the lower section plane;
d4) constructing the path of the deposition head (101) with respect to the worktable (111) and the relative orientation angle (O(i)) of the deposition head(101) and of the worktable (111) for the deposition of the material layer corresponding to the surface of the three-dimensional object (obj) comprised between said lower section plane and said upper section plane by repeating the steps d2) and d3) for each point of the contour line in the upper section plane.

2. Method according to claim 1, wherein the digital three-dimensional model is an STL format three-dimensional file and the contour line on each section plane is a polygonal line.

3. Method for calculating the deposition path for addictive manufacturing making use of a system comprising a worktable (111) on which the object to be produced (obj) is made by deposition and solidification, in sequence, of material layers one on each other by a deposition head (101), having a predetermined direction feeding the material of the layers, said deposition head and said worktable being movable and orientable with respect to each other according to at least five axes and a processing unit (120) for determining the movement path of the tool and/or of the worktable (111), which method comprises the following steps:
a) providing a digital three-dimensional model of the object to be manufactured (obj);
b) defining a sequence of section planes of the digital three-dimensional model, which section planes have a predetermined relative orientation and a predetermined relative distance from one another, while respectively between the two successive section planes a layer or slice of said digital three-dimensional model is formed and has a contour line in each of the two successive section planes;
c) determining the digital line (Cnt(n)) of the contour of the object (obj) at each section plane obtained by intersecting each section plane with the digital three-dimensional model;
d) determining the path of the deposition head (101) depositing a material layer and the relative orientation (O(i)) between said deposition head (101) and the worktable (111) for depositing a material layer corresponding to the shape of the surfaces interfacing with the outside or with a cavity of the slice of the three-dimensional model delimited by two adjacent section planes;
e) depositing said material layer by moving said deposition head and/or said worktable correspondingly to the path (pth) and relative orientation (O(i+n))of the deposition head (101) and of the worktable determined in the preceding step d);
f) repeating steps d) and e) till depositing the material layers for each of the slices of the three-dimensional model defined by the sequence of section planes,
**Characterized by** providing the following steps
at step b)
b1) defining a space direction with reference to said object, as shown by the digital three-dimensional model and which space direction is the direction normal to the worktable plane on which the material is deposited;
b2) defining section planes (SP) of the digital three-dimensional model parallel to one another and orthogonal to said space direction and which said section planes are spaced from each other by a predetermined extent that can change from a minimum distance to a maximum distance of said section planes;
at step d)
d1) defining a set of points on each one of the contour lines generated by the intersection of respectively each one of the section planes (SP) with the outer surface or the surface delimiting the inner cavities of the digital three-dimensional model;
d2) for each point (Pi) of a contour line (Cnt(upper)) in a first section plane, derive the Tangent Vector at the said upper contour line,
said Tangent Vector constituting the normal of an intersection plane parallel to said space direction and perpendicular to said Tangent Vector and
said tangent vector being determined at the points defined on the contour line at step d1).
d3) defining, as the direction of relative orientation between the worktable (111) and the deposition head (101), the direction of the vector V(Pᵢ₋₁, Pᵢ₊₁) defined by the segment joining said point on the contour line of the upper section plane and through which said intersection plane passes with the point of intersection of this plane with the contour line (Cnt(lower)) of the lower section plane;
d4) constructing the path of the deposition head (101) with respect to the worktable (111) and the relative orientation angle (O(i)) of the deposition head(101) and of the worktable (111) for the deposition of the material layer corresponding to the surface of the three-dimensional object (obj) comprised between said lower section plane and said upper section plane by repeating the steps d2) and d3) for each point of the contour line in the upper section plane.

4. Method according to one or more of the preceding claims, wherein it provides to automatically identify empty spaces between adjacent materials layers defined with respect to the contour lines in the adjacent section planes and comprising the following steps:
- defining a maximum allowable distance threshold (so-called printing threshold) between the contour line of the digital three-dimensional model in a first lower section plane and the contour line of the digital three-dimensional model in the section plane immediately above said first section plane, which maximum threshold distance still allows the material layer of the upper slice to rest on the material layer of the lower slice by suitably orienting the part being constructed;
- carrying out step d1) for the contour lines in said two adjacent section planes;
- determining, for each point along the upper and lower contour line, the distance from the segments of the contour line of the adjacent section layer, respectively lower and upper;
- comparing said distances with the printing threshold and determining the contour of the empty space between said two contour lines, linking the points on each of the two contour lines having a distance from the segments of the other contour line higher than said printing threshold;
- taking into account at least the part of the contour line that delimits the empty space and that corresponds to a segment of the contour line of the lower slice
said line constituting the support for a successive adjacent filling profile and
- determining the material deposition path of the successive filling profile by providing an offset translation of the layer immediately below,
said offset being at most equal to the value of the printing threshold, while
said step is repeated for each new filling profile deposited on an adjacent previous filling profile till a last deposited filling profile is adapted to constitute the support for at least one segment of the material layer of the upper slice, i.e. having a distance from the material layer of the upper slice not higher than the printing threshold.

5. Method according to claim 4, wherein for each point of the filling profile, it determines if these points are inside or outside of the empty space, i.e. of the area delimited by said line delimiting the empty space, the points falling out of the contour delimiting the empty space being rejected for determining the deposition path and only the points falling in said empty space being maintained.

6. Method according to claim 4 or 5, wherein the points of intersection of the profile of each filling material layer with the material layer of the upper slice are determined, by starting or ending each filling layer at said point of intersection.

7. Method according to one or more of preceding claims 4 to 6, wherein the following steps are provided:
i) for each point of the contour line of the upper section plane a corresponding point is determined on the contour line in the lower section plane, said point corresponding to the point of intersection of said contour line in the lower section plane with a plane of intersection passing by the point on the contour line of the upper section plane and which plane is perpendicular to the segment joining the two points immediately adjacent to said point on opposite sides thereof;
ii) for each point along the contour line of the upper section plane, the distance from the associated point defined by the plane of intersection on the contour line in the lower section plane is determined and said distance is compared with the printing threshold,
iii) marking in a different manner the points on the contour line in the upper section plane, whose distance from the corresponding intersection point on the line of the lower section plane is lower than the printing threshold from those points for which the aforesaid distance from the corresponding intersection point on the contour line in the lower section plane is higher than the printing threshold;
iv) the intersection points generated on the lower contour line being transferred on said line;
v) while the junction line of each pair of points constituted by a point on the contour line of the upper section plane and by a corresponding intersection point on the contour line of the lower section plane whose distance is lower than the printing threshold, defines the axis of orientation of the deposition head (101) with respect to the worktable (111) and while
vi) then, for each point on the contour line in the lower section plane, the minimum distance is determined from a facing segment of the contour line in the upper section plane,
vii) said distance being compared with the printing threshold and the points for which said distance is higher than said printing threshold being identified and marked in a manner different from those points for which said distance is smaller than the printing threshold,
viii) the points, on the contour line in the upper section plane and those on the contour line in the lower section plane for which the distance from the corresponding intersection point on the contour line of the lower section plane and the facing segment of the contour line in the upper section plane respectively is higher than the printing threshold, being joined by an interpolation line that forms the contour of an empty space between the material layers of two adjacent slices.

8. Method according to claim 7, wherein the orientation between the deposition head (101) and the worktable (111) for the deposition of the filling layers of the empty spaces is determined according to the following steps:
ix) starting from the segment of the contour line delimiting an empty space and that is in the lower section plane, the contour line for the filling profile immediately adjacent to the contour line of the previous filling profile is determined by an offset of predetermined distance from said contour line of the previous filling layer,
x) which points of the contour line for the new filling layer fall inside the empty space being determined, outside said empty space and at the exact point of intersection with the contour of said empty space, while for each point of the contour line of the new filling profile falling into the empty space the orientation of the deposition head (101) is determined with respect to the worktable (111) correspondingly to the direction of the vector joining said point with the origin point of the contour line of the previous filling profile or of the segment of the contour line delimiting the empty space in the lower section plane;
xi) the path of the deposition head (101) with respect to the worktable (111) is determined by the path from one to the other point along the contour line of the filling layer to be deposited;
xii) the aforesaid steps being repeated till determining, for at least one point, that it is inside the empty space and the cycle ending when all the points of the contour line for the new filling layer are all outside of the contour delimiting the empty space.

9. Method according to one or more of preceding claim 7 or 8, wherein the linking of the points for determining the contour line delimiting an empty space as at step viii) is carried out by following a clockwise and anticlockwise linking direction order, the clockwise linking direction corresponding to islands and the anticlockwise connection direction corresponding to a line delimiting an outer or isolated empty space.

10. Method according to one or more of claims 7 to 9, wherein after having deposited all the filling layers, the material of the layer of the upper slice is deposited.

11. Method according to one or more of the preceding claims, wherein the program for generating or loading a digital three-dimensional model of the object (obj) to be produced is a parametric CAD or a converter and/or generator of STL format files.

12. Fixed or portable storage unit (140) wherein a program containing the instructions for carrying out the method according to one or more of preceding claims 1 to 11 is stored.

13. System comprising a worktable (111) on which the object (obj) to be produced is made by deposition and solidification, in sequence, of material layers one on each other by a deposition head (101), having a predetermined direction feeding the material of the layers, said deposition head and said worktable being movable with respect to each other and being orientable with respect to each other according to at least five axes and a processing unit (120) for determining the movement path of the tool and/or worktable (111), **characterized in that** the processing unit (120) is configured to control the deposition path with the calculation method according to one or more of preceding claims 1 to 11.

## Patentansprüche

1. Verfahren zur Berechnung der Auftragsstrecke bei der additiven Fertigung unter Verwendung eines Systems mit einem Arbeitstisch (111), auf dem das herzustellende Objekt (obj) durch sequenzweises Auftragen und Härten von übereinanderliegenden Materialschichten mittels eines Auftragskopfes (101) mit einer vorbestimmte Zuführungsrichtung des Schichtmaterials hergestellt wird, wobei der Auftragskopf und der Arbeitstisch relativ zueinander gemäß mindestens fünf Achsen beweglich und ausrichtbar sind,
und mit einer Verarbeitungseinheit (120) zum Bestimmen der Bewegungsstrecke des Werkzeugs und/oder des Arbeitstisches (111), wobei das Verfahren die folgenden Schritte umfasst:
a) Bereitstellen eines digitalen dreidimensionalen Modells des zu fertigenden Objekts (obj);
b) Definieren einer Folge von Schnittebenen des digitalen dreidimensionalen Modells, wobei die Schnittebenen eine vorbestimmte relative Ausrichtung und einen vorbestimmten relativen Abstand zueinander haben, während jeweils zwischen den zwei aufeinanderfolgenden Schnittebenen eine Schicht oder Scheibe des digitalen dreidimensionalen Modells gebildet wird und in jeder der zwei aufeinanderfolgenden Schnittebenen eine Konturlinie aufweist;
c) Bestimmen der digitalen Linie (Cnt(n)) der Kontur des Objekts (obj) in jeder Schnittebene, wobei diese durch Schneiden jeder Schnittebene mit dem digitalen dreidimensionalen Modell erhalten wird;
d) Bestimmen der Strecke des eine Materialschicht ablegenden Auftragskopfes (101) und der relativen Ausrichtung (O(i)) zwischen dem Auftragskopf (101) und dem Arbeitstisch (111) zum Ablegen einer Materialschicht entsprechend der Form der Oberflächen, die als Schnittstelle zur Außenseite oder zu einem Hohlraum der durch zwei benachbarte Schnittebenen begrenzten Scheibe des dreidimensionalen Modells dienen;
e) Auftragen der Materialschicht durch Bewegen des Auftragskopfes und/oder des Arbeitstisches entsprechend der Strecke (pth) und der relativen Ausrichtung (O(i+n)) des Auftragskopfes (101) und des Arbeitstisches, die im vorhergehenden Schritt d) bestimmt wurden;
f) Wiederholen der Schritte d) und e) bis zum Auftragen der Materialschichten für jede der durch die Folge der Schnittebenen definierten Scheiben des dreidimensionalen Modells,
**gekennzeichnet durch** die folgenden Schritte:
beim Schritt b)
b1) Definieren einer Raumrichtung in Bezug auf das Objekt, wie durch das digitale dreidimensionale Modell dargestellt, wobei die Raumrichtung die Richtung senkrecht zur Arbeitstischebene ist, auf der das Material abgeleget wird;
b2) Definieren von Schnittebenen (SP) des digitalen dreidimensionalen Modells die parallel zueinander und orthogonal zu der genannten Raumrichtung verlaufen, wobei die besagten Schnittebenen um ein vorbestimmtes Maß voneinander beabstandet sind, das sich von einem minimalen Abstand zu einem maximalen Abstand der besagten Schnittebenen ändern kann;
beim Schritt d)
d1) Definieren eines Satzes von Punkten auf jeder der Konturlinien, die durch Schneiden jeder der Schnittebenen (SP) mit der äußeren Oberfläche oder der Oberfläche, die die inneren Hohlräume des digitalen dreidimensionalen Modells begrenzt, erzeugt werden;
d2) für jeden Punkt (Pi) einer Konturlinie (Cnt(upper)) in einer ersten Schnittebene, Verbinden der beiden unmittelbar benachbarten Punkte (Pi-1, Pi+1) durch ein Verbindungssegment und Berechnen der Position eines Punktes auf der Konturlinie in einer zweiten Schnittebene direkt unterhalb der ersten Schnittebene in Bezug auf die in Schritt b1) definierte Raumrichtung als der Schnittpunkt der zweiten Konturlinie in der unteren Ebene mit einer Schnittebene parallel zu der Raumrichtung und senkrecht zu dem Verbindungssegment;
d3) Definieren, als die Richtung der relativen Ausrichtung zwischen dem Arbeitstisch (111) und dem Auftragskopf (101), die Richtung des Vektors V(Pi-1, Pi+1), der durch das Segment definiert ist, das den Punkt auf der Konturlinie der oberen Schnittebene verbindet und durch das die Schnittebene mit dem Schnittpunkt dieser Ebene mit der Konturlinie (Cnt(lower)) der unteren Schnittebene verläuft;
d4) Erstellen der Strecke des Auftragskopfes (101) in Bezug auf den Arbeitstisch (111) und des relativen Ausrichtungswinkels (O(i)) des Auftragskopfes (101) und des Arbeitstisches (111) für das Auftragen der Materialschicht, die der Oberfläche des dreidimensionalen Objektes (obj) entspricht, welche zwischen der unteren Schnittebene und der oberen Schnittebene liegt, durch Wiederholen der Schritte d2) und d3) für jeden Punkt der Konturlinie in der oberen Schnittebene.

2. Verfahren nach Anspruch 1, wobei das digitale dreidimensionale Modell eine dreidimensionale Datei im STL-Format ist und die Konturlinie auf jeder Schnittebene eine polygonale Linie ist.

3. Verfahren zur Berechnung der Auftragsstrecke bei der additiven Fertigung unter Verwendung eines Systems mit einem Arbeitstisch (111), auf dem das herzustellende Objekt (obj) durch sequenzweises Auftragen und Härten von übereinanderliegenden Materialschichten mittels eines Auftragskopfes (101) hergestellt wird, der eine vorbestimmte Zuführungsrichtung des Materials der Schichten aufweist, wobei der Auftragskopf und der Arbeitstisch in Bezug zueinander gemäß mindestens fünf Achsen beweglich und ausrichtbar sind, und mit einer Verarbeitungseinheit (120) zum Bestimmen der Bewegungsstrecke des Werkzeugs und/oder des Arbeitstisches (111), wobei das Verfahren die folgenden Schritte umfasst:
a) Bereitstellen eines digitalen dreidimensionalen Modells des zu fertigenden Objekts (obj);
b) Definieren einer Folge von Schnittebenen des digitalen dreidimensionalen Modells, wobei die Schnittebenen eine vorbestimmte relative Ausrichtung und einen vorbestimmten relativen Abstand zueinander haben, während jeweils zwischen den zwei aufeinanderfolgenden Schnittebenen eine Schicht oder Scheibe des digitalen dreidimensionalen Modells gebildet wird und in jeder der zwei aufeinanderfolgenden Schnittebenen eine Konturlinie aufweist;
c) Bestimmen der digitalen Linie (Cnt(n)) der Kontur des Objekts (obj) in jeder Schnittebene, wobei diese durch Schneiden jeder Schnittebene mit dem digitalen dreidimensionalen Modell erhalten wird;
d) Bestimmen der Strecke des eine Materialschicht ablegenden Auftragskopfes (101) und der relativen Ausrichtung (O(i)) zwischen dem Auftragskopf (101) und dem Arbeitstisch (111) zum Ablegen einer Materialschicht entsprechend der Form der Oberflächen, die als Schnittstelle zur Außenseite oder zu einem Hohlraum der durch zwei benachbarte Schnittebenen begrenzten Scheibe des dreidimensionalen Modells dienen;
e) Auftragen der Materialschicht durch Bewegen des Auftragskopfes und/oder des Arbeitstisches entsprechend der Strecke (pth) und der relativen Ausrichtung (O(i+n)) des Auftragskopfes (101) und des Arbeitstisches, die im vorhergehenden Schritt d) bestimmt wurden;
f) Wiederholen der Schritte d) und e) bis zum Ablegen der Materialschichten für jede der durch die Folge der Schnittebenen definierten Scheiben des dreidimensionalen Modells,
**gekennzeichnet durch** die folgenden Schritte:
beim Schritt b)
b1) Definieren einer Raumrichtung in Bezug auf das Objekt, wie durch das digitale dreidimensionale Modell dargestellt, wobei die Raumrichtung die Richtung senkrecht zur Arbeitstischebene ist, auf der das Material abgeleget wird;
b2) Definieren von Schnittebenen (SP) des digitalen dreidimensionalen Modells, die parallel zueinander und orthogonal zu der genannten Raumrichtung verlaufen, wobei die besagten Schnittebenen um ein vorbestimmtes Maß voneinander beabstandet sind, das sich von einem minimalen Abstand zu einem maximalen Abstand der besagten Schnittebenen ändern kann;
beim Schritt d)
d1) Definieren eines Satzes von Punkten auf jeder der Konturlinien, die durch Schneiden jeder der Schnittebenen (SP) mit der äußeren Oberfläche oder der Oberfläche, die die inneren Hohlräume des digitalen dreidimensionalen Modells begrenzt, erzeugt werden;
d2) für jeden Punkt (Pi) einer Konturlinie (Cnt (oben)) in einer ersten Schnittebene, Ableiten des Tangentenvektors an der genannten oberen Konturlinie,
wobei der Tangentenvektor die Normale einer Schnittebene parallel zu der Raumrichtung und senkrecht zu dem Tangentenvektor bildet und
wobei der Tangentenvektor an den Punkten bestimmt wird, die in Schritt d1) auf der Konturlinie definiert sind,
d3) Definieren, als die Richtung der relativen Ausrichtung zwischen dem Arbeitstisch (111) und dem Auftragskopf (101), die Richtung des Vektors V(Pi-1, Pi+1), der durch das Segment definiert ist, das den Punkt auf der Konturlinie der oberen Schnittebene verbindet und durch das die Schnittebene mit dem Schnittpunkt dieser Ebene mit der Konturlinie (Cnt(lower)) der unteren Schnittebene verläuft;
d4) Erstellen der Strecke des Auftragskopfes (101) in Bezug auf den Arbeitstisch (111) und des relativen Ausrichtungswinkels (O(i)) des Auftragskopfes (101) und des Arbeitstisches (111) für das Auftragen der Materialschicht, die der Oberfläche des dreidimensionalen Objektes (obj) entspricht, welche zwischen der unteren Schnittebene und der oberen Schnittebene liegt, durch Wiederholen der Schritte d2) und d3) für jeden Punkt der Konturlinie in der oberen Schnittebene.

4. Verfahren nach einem oder mehreren der vorhergehenden Ansprüche, bei dem die automatische Erkennung von Leerräumen zwischen benachbarten Materialschichten vorgesehen ist, die in Bezug auf die Konturlinien in den benachbarten Schnittebenen definiert sind, und das folgende Schritte umfasst:
- Definieren eines maximal zulässigen Abstandsschwellwerts (sogenannter Druckschwellwert) zwischen der Konturlinie des digitalen dreidimensionalen Modells in einer ersten unteren Schnittebene und der Konturlinie des digitalen dreidimensionalen Modells in der Schnittebene unmittelbar über der ersten Schnittebene, wobei der maximale Abstandsschwellwert noch ein Aufliegen der Materialschicht der oberen Scheibe auf der Materialschicht der unteren Scheibe durch geeignetes Ausrichten des zu fertigenden Teils ermöglicht;
- Ausführen von Schritt dl) für die Konturlinien in den beiden benachbarten Schnittebenen;
- Bestimmen, für jeden Punkt entlang der oberen und unteren Konturlinie, des Abstandes zu den Segmenten der Konturlinie der benachbarten Schnittschicht, jeweils unten und oben;
- Vergleichen der Abstände mit dem Druckschwellenwert und Bestimmen der Kontur des Leerraumes zwischen den beiden Konturlinien, Verbinden der Punkte auf jeder der beiden Konturlinien, die einen Abstand zu den Segmenten der anderen Konturlinie haben, der größer ist als der Druckschwellenwert;
- Berücksichtigen mindestens des Teils der Konturlinie, der den Leerraum begrenzt und der einem Segment der Konturlinie der unteren Scheibe entspricht
wobei die Linie die Abstützung für ein nachfolgendes benachbartes Füllungsprofil bildet und
- Bestimmung der Material-Auftragsstrecke des aufeinanderfolgenden Füllungsprofils durch Bereitstellung einer Offset-Verschiebung der unmittelbar darunter liegenden Schicht,
wobei der Offset höchstens gleich dem Wert des Druckschwellenwertes ist, während
dieser Schritt für jedes neue Füllungsprofil, das auf einem benachbarten vorherigen Füllungsprofil aufgetragen wird, wiederholt wird, bis ein letztes abgelegtes Füllungsprofil geeignet ist, die Abstützung für mindestens ein Segment der Materialschicht der oberen Scheibe zu bilden, d. h. einen Abstand von der Materialschicht der oberen Scheibe hat, der nicht größer als der Druckschwellenwert ist.

5. Verfahren nach Anspruch 4, bei dem für jeden Punkt des Füllungsprofils ermittelt wird, ob sich diese Punkte innerhalb oder außerhalb des Leerraums befinden, d.h. des Bereichs, der durch die den Leerraum begrenzende Linie begrenzt wird, wobei die Punkte, die aus der den Leerraum begrenzenden Kontur herausfallen, für die Bestimmung der Auftragsstrecke verworfen werden und nur die Punkte, die in den Leerraum liegen, beibehalten werden.

6. Verfahren nach Anspruch 4 oder 5, wobei die Schnittpunkte des Profils jeder Füllungsmaterialschicht mit der Materialschicht der oberen Scheibe bestimmt werden, indem jede Füllungsschicht an diesem Schnittpunkt beginnt oder endet.

7. Verfahren nach einem oder mehreren der vorhergehenden Ansprüche 4 bis 6, wobei die folgenden Schritte vorgesehen sind:
i) für jeden Punkt der Konturlinie der oberen Schnittebene wird ein entsprechender Punkt auf der Konturlinie in der unteren Schnittebene bestimmt, wobei der Punkt dem Schnittpunkt der Konturlinie in der unteren Schnittebene mit einer Schnittebene entspricht, die durch den Punkt auf der Konturlinie der oberen Schnittebene verläuft und die senkrecht zu dem Segment ist, das die beiden dem Punkt unmittelbar benachbarten Punkte auf gegenüberliegenden Seiten davon verbindet;
ii) für jeden Punkt entlang der Konturlinie der oberen Schnittebene wird der Abstand zum zugehörigen Punkt bestimmt, der durch die Schnittebene auf der Konturlinie in der unteren Schnittebene definiert ist, und dieser Abstand wird mit dem Druckschwellenwert verglichen,
iii) Markieren der Punkte auf der Konturlinie in der oberen Schnittebene, deren Abstand von dem entsprechenden Schnittpunkt auf der Linie der unteren Schnittebene kleiner als der Druckschwellenwert ist, in unterschiedlicher Weise von denjenigen Punkten, für die der vorgenannte Abstand von dem entsprechenden Schnittpunkt auf der Konturlinie in der unteren Schnittebene größer als der Druckschwellenwert ist;
iv) Übertragen der auf der unteren Konturlinie erzeugten Schnittpunkte auf diese Linie;
v) während die Verbindungslinie jedes Punktpaares, das durch einen Punkt auf der Konturlinie der oberen Schnittebene und durch einen entsprechenden Schnittpunkt auf der Konturlinie der unteren Schnittebene gebildet wird, deren Abstand kleiner als der Druckschwellenwert ist, die Ausrichtungsachse des Auftragskopfes (101) in Bezug auf den Arbeitstisch (I11) definiert und während
vi) anschließend für jeden Punkt auf der Konturlinie in der unteren Schnittebene der minimale Abstand zu einem gegenüberliegenden Segment der Konturlinie in der oberen Schnittebene bestimmt wird,
vii) wobei dieser Abstand mit dem Druckschwellenwert verglichen wird und die Punkte, für die dieser Abstand größer als der Druckschwellenwert ist, identifiziert und auf eine andere Weise markiert werden als die Punkte, für die dieser Abstand kleiner als der Druckschwellenwert ist,
viii) die Punkte auf der Konturlinie in der oberen Schnittebene und diejenigen auf der Konturlinie in der unteren Schnittebene, für die der Abstand von dem entsprechenden Schnittpunkt auf der Konturlinie der unteren Schnittebene mit dem gegenüberliegenden Segment der Konturlinie in der oberen Schnittebene jeweils größer ist als der Druckschwellenwert, durch eine Interpolationslinie verbunden werden, die die Kontur eines Leerraums zwischen den Materialschichten von zwei benachbarten Scheiben bildet.

8. Verfahren nach Anspruch 7, wobei die Ausrichtung zwischen dem Auftragskopf (101) und dem Arbeitstisch (111) zum Auftragen der Füllungsschichten der Leerräume gemäß den folgenden Schritten bestimmt wird:
ix) ausgehend von dem einen Leerraum begrenzenden und in der unteren Schnittebene liegenden Segment der Konturlinie, wird die Konturlinie für das unmittelbar an die Konturlinie des vorhergehenden Füllungsprofils angrenzende Füllungsprofil mit einem Offset von vorbestimmtem Abstand von der Konturlinie der vorhergehenden Füllungsschicht bestimmt,
x) Bestimmen, welche Punkte der Konturlinie für die neue Füllungsschicht jeweils innerhalb des Leerraums, außerhalb des Leerraums und am genauen Schnittpunkt mit der Kontur des Leerraums liegen, während für jeden Punkt der Konturlinie des neuen Füllungsprofils, der in den Leerraum liegt, die Ausrichtung des Auftragskopfes (101) in Bezug auf den Arbeitstisch (111) entsprechend der Richtung des Vektors bestimmt wird, der diesen Punkt mit dem Ursprungspunkt der Konturlinie des vorherigen Füllungsprofils oder des den Leerraum begrenzenden Segments der Konturlinie in der unteren Schnittebene verbindet;
xi) die Strecke des Auftragskopfes (101) in Bezug auf den Arbeitstisch (111) durch die Strecke von dem einen zu dem anderen Punkt entlang der Konturlinie der aufzutragenden Füllungsschicht bestimmt wird;
xii) Wiederholen der vorgenannten Schritte, bis für mindestens einen Punkt festgestellt wird, dass er sich innerhalb des Leerraums befindet, und Beenden des Zyklus, wenn alle Punkte der Konturlinie für die neue Füllungsschicht alle außerhalb der den Leerraum begrenzenden Kontur liegen.

9. Verfahren nach einem oder mehreren der vorhergehenden Ansprüche 7 oder 8, wobei die Verbindung der Punkte zur Bestimmung der einen Leerraum abgrenzenden Konturlinie wie in Schritt viii), durch Folgen einer Verbindungsrichtungsreihenfolge im Uhrzeigersinn und gegen den Uhrzeigersinn durchgeführt wird, wobei die Verbindungsrichtung im Uhrzeigersinn Inseln entspricht und die Verbindungsrichtung gegen den Uhrzeigersinn einer Linie entspricht, die einen äußeren oder isolierten Leerraum abgrenzt.

10. Verfahren nach einem oder mehreren der Ansprüche 7 bis 9, wobei nach dem Auftragen aller Füllungsschichten das Schichtmaterial der oberen Scheibe aufgetragen wird.

11. Verfahren nach einem oder mehreren der vorhergehenden Ansprüche, wobei das Programm zum Erzeugen oder Laden eines digitalen dreidimensionalen Modells des herzustellenden Objekts (obj) ein parametrisches CAD oder ein Konverter und/oder Generator von Dateien im STL-Format ist.

12. Feste oder tragbare Speichereinheit (140), in der ein Programm gespeichert ist, das die Anweisungen zur Durchführung des Verfahrens nach einem oder mehreren der vorhergehenden Ansprüche 1 bis 11 enthält.

13. System umfassend einen Arbeitstisch (111), auf dem das herzustellende Objekt (obj) durch sequenzweises Auftragen und Härten von übereinanderliegenden Materialschichten mittels eines Auftragskopfes (101) mit einer vorbestimmten Zuführungsrichtung des Schichtmaterials hergestellt wird, wobei der Auftragskopf und der Arbeitstisch relativ zueinander beweglich sind und nach mindestens fünf Achsen zueinander ausrichtbar sind, und eine Verarbeitungseinheit (120) zum Bestimmen der Bewegungsstrecke des Werkzeugs und/oder des Arbeitstisches (111), **dadurch gekennzeichnet, dass** die Verarbeitungseinheit (120) dazu eingerichtet ist, die Auftragsstrecke mit dem Berechnungsverfahren nach einem oder mehreren der vorhergehenden Ansprüche 1 bis 11 zu steuern.

## Revendications

1. Méthode pour calculer la trajectoire de dépôt pour la fabrication additive utilisant un système comprenant une table de travail (111) sur laquelle l'objet à réaliser (obj) est réalisé en déposant et en solidifiant, en séquence, des couches de matériau les unes sur les autres au moyen d'une tête de dépôt (101) ayant une direction prédéterminée alimentant le matériau des couches, ladite tête de dépôt et ladite table de travail étant mobiles et orientables l'une par rapport à l'autre selon au moins cinq axes, et une unité de traitement (120) pour déterminer la trajectoire de déplacement de l'outil et/ou de la table de travail (111), laquelle méthode comprend les étapes suivantes:
a) fournir un modèle numérique tridimensionnel de l'objet à fabriquer (obj);
b) définir une séquence de plans de coupe du modèle numérique tridimensionnel, lesquels plans de coupe ont une orientation relative prédéterminée et une distance relative prédéterminée l'un de l'autre, tandis qu'une couche ou tranche dudit modèle numérique tridimensionnel est formée respectivement entre les deux plans de coupe successifs et a une ligne de contour dans chacun des deux plans de coupe successifs;
c) déterminer la ligne numérique (Cnt(n)) du contour de l'objet (obj) en correspondance de chaque plan de coupe obtenu en intersectant chaque plan de coupe avec le modèle numérique tridimensionnel;
d) déterminer la trajectoire de la tête de dépôt (101) déposant une couche de matériau et l'orientation relative (O(i)) entre ladite tête de dépôt (101) et la table de travail (111) pour déposer une couche de matériau correspondant à la forme des surfaces en interface avec l'extérieur ou avec une cavité de la tranche du modèle tridimensionnel délimitée par deux plans de coupe adjacents;
e) déposer ladite couche de matériau en déplaçant ladite tête de dépôt et/ou ladite table de travail en fonction de la trajectoire (pth) et de l'orientation relative (O(i+n)) de la tête de dépôt (101) et de la table de travail déterminées à la précédente étape d);
f) répéter les étapes d) et e) jusqu'à la déposition des couches de matériau pour chacune des tranches du modèle tridimensionnel défini par la séquence des plans de coupe,
**caractérisée en ce qu'**elle prévoit les étapes suivantes:
à l'étape b)
b1) définir une direction spatiale en référence audit objet, telle que représentée par le modèle numérique tridimensionnel et laquelle direction spatiale est la direction normale vers le plan de la table de travail sur laquelle le matériau est déposé;
b2) définir des plans de coupe (SP) du modèle numérique tridimensionnel parallèles les uns aux autres et orthogonaux à ladite direction spatiale et lesquels plans de coupe sont espacés les uns des autres d'une étendue prédéterminée qui peut changer d'une distance minimale à une distance maximale desdits plans de coupe;
à l'étape d)
d1) définir un ensemble de points sur chacune des lignes de contour générées par l'intersection de respectivement chacun des plans de coupe (SP) avec la surface externe ou avec la surface délimitant les cavités internes du modèle numérique tridimensionnel;
d2) pour chaque point (Pi) d'une ligne de contour (Cnt(upper)) dans un premier plan de couple, connecter les deux points immédiatement adjacents (Pi-1, Pi+1) au moyen d'un segment de jonction et calculer la position d'un point sur la ligne de contour dans un second plan de coupe directement au-dessous dudit premier plan de coupe en référence à la direction spatiale définie à l'étape b1) comme le point d'intersection de ladite seconde ligne de contour dans ledit plan inférieur avec un plan d'intersection parallèle à ladite direction spatiale et perpendiculaire audit segment de jonction;
d3) définir, comme direction d'orientation relative entre la table de travail (111) et la tête de dépôt (101), la direction du vecteur V(Pi-1, Pi+1) définie par le segment joignant ledit point sur la ligne de contour du plan de coupe supérieur et à travers lequel passe ledit plan d'intersection avec le point d'intersection sur ce plan avec la ligne de contour (Cnt(lower)) du plan de coupe inférieur;
d4) construire la trajectoire de la tête de dépôt (101) par rapport à la table de travail (111) et l'angle d'orientation relatif (O(i)) de la tête de dépôt (101) et de la table de travail (111) pour le dépôt de la couche de matériau correspondant à la surface de l'objet tridimensionnel (obj) incluse entre ledit plan de coupe inférieur et ledit plan de coupe supérieur en répétant les étapes d2) et d3) pour chaque point de la ligne de contour dans le plan de coupe supérieur.

2. Méthode selon la revendication 1, dans laquelle le modèle numérique tridimensionnel est un fichier tridimensionnel au format STL et la ligne de contour sur chaque plan de coupe est une ligne polygonale.

3. Méthode pour calculer la trajectoire de dépôt pour la fabrication additive utilisant un système comprenant une table de travail (111) sur laquelle l'objet à réaliser (obj) est réalisé en déposant et en solidifiant, en séquence, des couches de matériau les unes sur les autres au moyen d'une tête de dépôt (101) ayant une direction prédéterminée alimentant le matériau des couches, ladite tête de dépôt et ladite table de travail étant mobiles et orientables l'une par rapport à l'autre selon au moins cinq axes, et une unité de traitement (120) pour déterminer la trajectoire de déplacement de l'outil et/ou de la table de travail (111), laquelle méthode comprend les étapes suivantes:
a) fournir un modèle numérique tridimensionnel de l'objet à fabriquer (obj);
b) définir une séquence de plans de coupe du modèle numérique tridimensionnel, lesquels plans de coupe ont une orientation relative prédéterminée et une distance relative prédéterminée l'un de l'autre, tandis qu'une couche ou tranche dudit modèle numérique tridimensionnel est formée respectivement entre les deux plans de coupe successifs et a une ligne de contour dans chacun des deux plans de coupe successifs;
c) déterminer la ligne numérique (Cnt(n)) du contour de l'objet (obj) en correspondance de chaque plan de coupe obtenu en intersectant chaque plan de coupe avec le modèle numérique tridimensionnel;
d) déterminer la trajectoire de la tête de dépôt (101) déposant une couche de matériau et l'orientation relative (O(i)) entre ladite tête de dépôt (101) et la table de travail (111) pour déposer une couche de matériau correspondant à la forme des surfaces en interface avec l'extérieur ou avec une cavité de la tranche du modèle tridimensionnel délimitée par deux plans de coupe adjacents;
e) déposer ladite couche de matériau en déplaçant ladite tête de dépôt et/ou ladite table de travail en fonction de la trajectoire (pth) et de l'orientation relative (O(i+n)) de la tête de dépôt (101) et de la table de travail déterminées à la précédente étape d);
f) répéter les étapes d) et e) jusqu'à la déposition des couches de matériau pour chacune des tranches du modèle tridimensionnel défini par la séquence des plans de coupe,
**Caractérisée en ce qu'**elle prévoit les étapes suivantes
à l'étape b)
b1) définir une direction spatiale en référence audit objet, telle que représentée par le modèle numérique tridimensionnel et laquelle direction spatiale est la direction normale vers le plan de la table de travail sur laquelle le matériau est déposé;
b2) définir des plans de coupe (SP) du modèle numérique tridimensionnel parallèles les uns aux autres et orthogonaux à ladite direction spatiale et lesquels plans de coupe sont espacés les uns des autres d'une étendue prédéterminée qui peut changer d'une distance minimale à une distance maximale desdits plans de coupe;
à l'étape d)
d1) définir un ensemble de points sur chacune des lignes de contour générées par l'intersection de respectivement chacun des plans de coupe (SP) avec la surface externe ou avec la surface délimitant les cavités internes du modèle numérique tridimensionnel;
d2) pour chaque point (Pi) d'une ligne de contour (Cnt(upper)) dans un premier plan de coupe, dériver le Vecteur Tangent à ladite ligne de contour supérieure,
ledit Vecteur Tangent constituant la normale d'un plan d'intersection parallèle à ladite direction spatiale et perpendiculaire audit Vecteur Tangent et
ledit vecteur tangent étant déterminé aux points définis sur la ligne de contour à l'étape d1).
d3) définir, comme direction d'orientation relative entre la table de travail (111) et la tête de dépôt (101), la direction du vecteur V(Pi-1, Pi+1) définie par le segment joignant ledit point sur la ligne de contour du plan de coupe supérieur et à travers lequel passe ledit plan d'intersection avec le point d'intersection sur ce plan avec la ligne de contour (Cnt(lower)) du plan de coupe inférieur;
d4) construire la trajectoire de la tête de dépôt (101) par rapport à la table de travail (111) et l'angle d'orientation relatif (O(i)) de la tête de dépôt (101) et de la table de travail (111) pour le dépôt de la couche de matériau correspondant à la surface de l'objet tridimensionnel (obj) incluse entre ledit plan de coupe inférieur et ledit plan de coupe supérieur en répétant les étapes d2) et d3) pour chaque point de la ligne de contour dans le plan de coupe supérieur.

4. Méthode selon l'une ou plusieurs des revendications précédentes, dans laquelle il est prévu d'identifier automatiquement les espaces vides entre des couches de matériau adjacentes définies par rapport aux lignes de contour dans les plans de coupe adjacents et comprenant les étapes suivantes:
- définir un seuil de distance maximale admissible (appelé seuil d'impression) entre la ligne de contour du modèle numérique tridimensionnel dans un premier plan de coupe inférieur et la ligne de contour du modèle numérique tridimensionnel dans le plan de coupe immédiatement au-dessus dudit premier plan de coupe, lequel seuil de distance maximale permet toujours à la couche de matériau de la tranche supérieure de reposer sur la couche de matériau de la tranche inférieure en orientant de manière appropriée la pièce en cours de réalisation;
- réaliser l'étape d1) pour les lignes de contour dans lesdits deux plans de coupe adjacents;
- déterminer, pour chaque point le long de la ligne de contour supérieure et inférieure, la distance des segments de la ligne de contour de la couche de coupe adjacente, respectivement inférieure et supérieure;
- comparer lesdites distances avec les seuils d'impression et déterminer le contour de l'espace vide entre lesdites deux lignes de contour, connecter les points sur chacune des deux lignes de contour ayant une distance des segments de l'autre ligne de contour supérieure audit seuil d'impression;
- tenir compte au moins de la partie de la ligne de contour délimitant l'espace vide et correspondant à un segment de la ligne de contour de la tranche inférieure
ladite ligne constituant le support d'un profil de remplissage adjacent successif et
- déterminer la trajectoire de dépôt du matériau du profil de remplissage successif en prévoyant une translation offset de la couche immédiatement en dessous,
ledit offset étant au plus égal à la valeur du seuil d'impression, tandis que
ladite étape est répétée pour chaque nouveau profil de remplissage sur un profil de remplissage précédent adjacent jusqu'à ce qu'un dernier profil de remplissage déposé soit apte à constituer le support pour au moins un segment de couche de matériau de la tranche supérieure, c.à.d. ayant une distance de la couche de matériau de la tranche supérieure non supérieure au seuil d'impression.

5. Méthode selon la revendication 4, dans laquelle pour chaque point du profil de remplissage, elle détermine si ces points sont à l'intérieur ou à l'extérieur de l'espace vide, c.à.d. de la zone délimitée par ladite ligne délimitant l'espace vide, les points sortant en dehors du contour délimitant l'espace vide étant rejetés pour déterminer la trajectoire de dépôt et seuls les points tombant dans ledit espace vide étant maintenus.

6. Méthode selon la revendication 4 ou 5, dans laquelle les points d'intersection du profil de chaque couche de matériau de remplissage avec la couche de matériau de la tranche supérieure sont déterminés en commençant ou terminant chaque couche de remplissage en correspondance dudit point d'intersection.

7. Méthode selon l'une ou plusieurs des revendications précédentes 4 à 6, dans laquelle les étapes suivantes sont prévues:
i) un point correspondant est déterminé sur la ligne de contour dans le plan de coupe inférieur pour chaque point de la ligne de contour du plan de coupe supérieur, ledit point correspondant au point d'intersection de ladite ligne de contour dans le plan de coupe inférieur avec un plan d'intersection passant par le point sur la ligne de contour du plan de coupe supérieur et lequel plan est perpendiculaire au segment joignant les deux points immédiatement adjacents audit point sur les côtés opposés de celui-ci;
ii) la distance du point associé défini par le plan d'intersection sur la ligne de contour dans le plan de coupe inférieur est déterminée pour chaque point le long de la ligne de contour du plan de coupe supérieur et ladite distance est comparée avec le seuil d'impression,
iii) marquer d'une manière différente les points sur la ligne de contour dans le plan de coupe supérieur, dont la distance du point d'intersection correspondant sur la ligne du plan de coupe inférieur est inférieure au seuil d'impression des points pour lesquels la distance susmentionnée du point d'intersection correspondant sur la ligne de contour dans le plan de coupe inférieur est supérieure au seuil d'impression;
iv) les points d'intersection générés sur la ligne de contour inférieure étant transférés sur ladite ligne;
v) tandis que la ligne de jonction de chaque paire de points constituée par un point sur la ligne de contour du plan de coupe supérieur et par un point d'intersection correspondant sur la ligne de contour du plan de coupe inférieur, dont la distance est inférieure au seuil d'impression, défini l'axe d'orientation de la tête de dépôt (101) par rapport à la table de travail (111) et tandis que
vi) alors, pour chaque point sur la ligne de contour dans le plan de coupe inférieur, la distance minimale est déterminée à partir d'un segment face à la ligne de contour dans le plan de coupe supérieur,
vii) ladite distance étant comparée avec le seuil d'impression et les points pour lesquels ladite distance est supérieure audit seuil d'impression étant identifié et marqué de manière différente des points pour lesquels ladite distance est inférieure au seuil d'impression,
viii) les points sur la ligne de contour dans le plan de coupe supérieur et ceux sur la ligne de contour dans le plan de coupe inférieur, pour lesquels la distance du point d'intersection correspondant sur la ligne de contour du plan de coupe inférieur et le segment face à la ligne de contour dans le plan de coupe supérieur est respectivement supérieure au seuil d'impression, étant joints par une ligne d'interpolation formant le contour d'un espace vide entre les couches de matériau de deux tranches adjacentes.

8. Méthode selon la revendication 7, dans laquelle l'orientation entre la tête de dépôt (101) et la table de travail (111) pour la déposition des couches de remplissage des espaces vide est déterminée selon les étapes suivantes:
ix) à partir du segment de la ligne de contour délimitant un espace vide et qui se trouve dans le plan de coupe inférieur, la ligne de contour pour le profil de remplissage immédiatement adjacent à la ligne de contour du profil de remplissage précédent est déterminée par un offset d'une distance prédéterminée par rapport à ladite ligne de contour de la couche de remplissage précédente,
x) lesquels points de la ligne de contour pour la nouvelle couche de remplissage tombent à l'intérieur de l'espace vide étant déterminé, à l'extérieur dudit espace vide et au point exact d'intersection avec le contour dudit espace vide, tandis que pour chaque point de la ligne de contour du nouveau profil de remplissage tombant dans l'espace vide, l'orientation de la tête de dépôt (101) est déterminée par rapport à la table de travail (111) en fonction de la direction du vecteur joignant ledit point avec le point d'origine de la ligne de contour du profil de remplissage précédent ou du segment de la ligne de contour délimitant l'espace vide dans le plan de coupe inférieur;
xi) la trajectoire de la tête de dépôt (101) par rapport à la table de travail (111) est déterminée par la trajectoire d'un point à l'autre le long de la ligne de contour de la couche de remplissage à être déposée;
xii) les étapes susmentionnées étant répétées jusqu'à déterminer, pour au moins un point, qu'il se trouve à l'intérieur de l'espace vide et le cycle se terminant lorsque tous les points de la ligne de contour pour la nouvelle couche de remplissage sont tous à l'extérieur du contour délimitant l'espace vide.

9. Méthode selon l'une ou plusieurs des revendications précédentes 7 ou 8, dans laquelle la connexion des points pour déterminer la ligne de contour délimitant un espace vide comme dans l'étape viii) est réalisée en suivant un ordre de direction de connexion horaire et anti-horaire, la direction de connexion horaire correspondant à des îlots et la direction de connexion anti-horaire correspondant à une ligne délimitant un espace vide externe ou isolé.

10. Méthode selon l'une ou plusieurs des revendications 7 à 9, dans laquelle, après avoir déposé toutes les couches de remplissage, le matériau de la couche de la tranche supérieure est déposé.

11. Méthode selon l'une ou plusieurs des revendications précédentes, dans laquelle le programme pour générer ou télécharger un modèle numérique tridimensionnel de l'objet (obj) à réaliser est un CAO paramétrique ou un convertisseur et/ou générateur de fichiers au format STL.

12. Unité de stockage fixe ou portable (140) dans laquelle un programme contenant des instructions pour réaliser la méthode selon l'une ou plusieurs des revendications précédentes 1 à 11 est stocké.

13. Système comprenant une table de travail (111) sur laquelle l'objet (obj) à réaliser est réalisé en déposant et en solidifiant, en séquence, des couches de matériau les unes sur les autres au moyen d'une tête de dépôt (101) ayant une direction prédéterminée alimentant le matériau des couches, ladite tête de dépôt et ladite table de travail étant mobiles l'une par rapport à l'autre et orientable l'une par rapport à l'autre selon au moins cinq axes, et une unité de traitement (120) pour déterminer la trajectoire de déplacement de l'outil et/ou de la table de travail (111),
**caractérisé en ce que** l'unité de traitement (120) est configurée pour contrôler la trajectoire de dépôt avec la méthode de calcul selon l'une ou plusieurs des revendications précédentes 1 à 11.
